(19) Europäisches Patentamt
European Patent Office
Office européen des brevets

(11) EP 2 532 069 B1

(12) **FASCICULE DE BREVET EUROPEEN**

(45) Date de publication et mention de la délivrance du brevet:
**25.06.2014 Bulletin 2014/26**

(21) Numéro de dépôt: **11702231.9**

(22) Date de dépôt: **04.02.2011**

(51) Int Cl.:
**H02J 7/00** $^{(2006.01)}$     **H01M 10/46** $^{(2006.01)}$

(86) Numéro de dépôt international:
**PCT/EP2011/051688**

(87) Numéro de publication internationale:
**WO 2011/095608 (11.08.2011 Gazette 2011/32)**

(54) **SYSTEME D'EQUILIBRAGE DE CHARGE POUR BATTERIES**

LADUNGSAUSGLEICHSSYSTEM FÜR BATTERIEN

CHARGE EQUALIZATION SYSTEM FOR BATTERIES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.02.2010 FR 1000478**

(43) Date de publication de la demande:
**12.12.2012 Bulletin 2012/50**

(73) Titulaire: **Commissariat à l'Énergie Atomique et aux Énergies Alternatives 75015 Paris (FR)**

(72) Inventeurs:
• **CHATROUX, Daniel F-38470 Teche (FR)**

• **DAUCHY, Julien F-38160 Chatte (FR)**
• **FERNANDEZ, Eric F-38760 Saint-Paul-de-Varces (FR)**
• **MERCIER, Sylvain F-38120 Saint-Égrève (FR)**

(74) Mandataire: **Sogan, Gloria et al Innovincia 310 avenue Berthelot 69008 Lyon (FR)**

(56) Documents cités:
**US-A- 6 140 800       US-A1- 2008 116 850
US-A1- 2009 195 079    US-A1- 2010 007 308**

EP 2 532 069 B1

**Description**

L'invention concerne un système d'équilibrage de charge pour batteries d'accumulateurs électrochimiques, pouvant être utilisées notamment dans le domaine des transports électriques, hybrides et les systèmes embarqués. L'invention concerne en particulier les batteries de type lithium-ion (Li-ion) adaptées pour ce genre d'applications, du fait de leur possibilité de stocker une forte énergie avec une faible masse. L'invention est également applicable aux super-condensateurs.

Un accumulateur électrochimique a une tension nominale de l'ordre de quelques volts, et plus précisément 3.3 V pour les batteries Li-ion à base de phosphate de fer et 4.2 V pour une technologie Li-ion à base d'oxyde de cobalt. Si cette tension est trop faible par rapport aux exigences du système à alimenter, plusieurs accumulateurs sont placés en série. Il est également possible de disposer en parallèle de chaque accumulateur associé en série, un ou des accumulateurs en parallèle afin d'augmenter la capacité disponible et de fournir un courant et une puissance supérieurs. Les accumulateurs associés en parallèle forment ainsi un étage. Un étage est constitué au minimum d'un accumulateur. Les étages sont mis en série pour atteindre le niveau de tension désiré. L'association des accumulateurs est appelée une batterie d'accumulateurs.

La charge ou décharge d'un accumulateur se traduit respectivement par une croissance ou décroissance de la tension à ses bornes. On considère un accumulateur chargé ou déchargé lorsque celui-ci a atteint un niveau de tension défini par le processus électrochimique. Dans un circuit utilisant plusieurs étages d'accumulateurs, le courant circulant à travers les étages est le même. Le niveau de charge ou de décharge des étages dépend donc des caractéristiques intrinsèques des accumulateurs, à savoir la capacité intrinsèque et les résistances internes parasites séries et parallèles, de l'électrolyte ou de contact entre les électrodes et l'électrolyte. Des différences de tension entre les étages sont dès lors possibles du fait des disparités de fabrication et de vieillissement.

Pour un accumulateur de technologie Li-ion, une tension trop élevée ou trop faible, dite tension de seuil, peut endommager ou détruire ce dernier. Pour exemple, la surcharge d'un accumulateur Li-ion à base d'oxyde de cobalt, peut entraîner son emballement thermique et un départ de feu. Pour un accumulateur Li-ion à base de phosphate de fer, une surcharge se traduit par une décomposition de l'électrolyte qui diminue sa durée de vie ou peut détériorer l'accumulateur. Une décharge trop importante qui amène à une tension inférieure à 2 V, par exemple, entraîne principalement une oxydation du collecteur de courant de l'électrode négative lorsque celui-ci est en cuivre et donc une détérioration de l'accumulateur. En conséquence, la surveillance des tensions aux bornes de chaque étage d'accumulateurs est obligatoire lors de la charge et décharge pour une question de sécurité et de fiabilité. Un dispositif dit de surveillance en parallèle de chaque étage permet d'assurer cette fonction.

Le dispositif de surveillance a pour fonction de suivre l'état de charge et décharge de chaque étage d'accumulateurs et de transmettre l'information au circuit de contrôle afin d'arrêter la charge ou la décharge de la batterie lorsqu'un étage a atteint sa tension de seuil. Cependant, sur une batterie avec plusieurs étages d'accumulateurs disposés en série, si la charge est arrêtée lorsque l'étage le plus chargé atteint sa tension de seuil, les autres étages peuvent ne pas être totalement chargés. Inversement, si la décharge est arrêtée lorsque l'étage le plus déchargé atteint sa tension de seuil, les autres étages peuvent ne pas être totalement déchargés. La charge de chaque étage d'accumulateurs n'est dès lors pas exploitée de façon optimale, ce qui représente un problème majeur dans des applications de types transports et embarquées ayant de fortes contraintes d'autonomie. Pour pallier ce problème, le dispositif de surveillance est généralement associé à un dispositif d'équilibrage.

Le dispositif d'équilibrage a pour fonction d'optimiser la charge de la batterie et donc son autonomie en amenant les étages d'accumulateurs mis en série à un état de charge et/ou décharge identique. Il existe deux catégories de dispositifs d'équilibrage, les dispositifs d'équilibrage dits à dissipation d'énergie, ou dits à transfert d'énergie.

Avec les dispositifs d'équilibrage à dissipation d'énergie, la tension aux bornes des étages est uniformisée en détournant le courant de charge d'un ou des étages ayant atteint la tension de seuil et en dissipant l'énergie dans une résistance. En variante, la tension aux bornes des étages est uniformisée en déchargeant un ou des étages ayant atteint la tension de seuil. Cependant, de tels dispositifs d'équilibrage à dissipation d'énergie présentent l'inconvénient majeur de consommer plus d'énergie que nécessaire pour charger la batterie. En effet, ce circuit oblige à décharger plusieurs accumulateurs ou dériver le courant de charge de plusieurs accumulateurs pour que le ou les derniers accumulateurs un peu moins chargés terminent leur charge. L'énergie dissipée peut donc être très supérieure à l'énergie de ou des charges devant être terminées. De plus, ils dissipent l'énergie excédentaire en chaleur, ce qui n'est pas compatible avec les contraintes d'intégration dans les applications de types transport et embarquées, et le fait que la durée de vie des accumulateurs baisse fortement lorsque la température s'élève.

Les dispositifs d'équilibrage à transfert d'énergie échangent de l'énergie entre la batterie d'accumulateurs ou un réseau auxiliaire d'énergie et les étages d'accumulateurs.

On connaît par exemple du brevet US5659237 un dispositif permettant le transfert d'énergie du réseau auxiliaire à des étages par une structure « flyback » avec plusieurs sorties et utilisant une inductance couplée comme élément de stockage. Ce dernier est un composant spécifique car dédié à cette application. Le coût d'un tel composant est prohibitif par rapport à la fonction à remplir.

On connaît par ailleurs du brevet CN1905259 un dispositif permettant le transfert d'énergie des étages à la batterie et qui utilise quant à lui une inductance par accumulateur comme élément de stockage. Cependant, ce dispositif n'opte pas pour un transfert d'énergie optimisé pour l'équilibrage des batteries dans les applications de types transports et embarquées. En effet, la fin de charge d'une batterie est déterminée par le dernier étage qui atteint la tension de seuil. Pour terminer la charge d'une batterie, l'énergie est prélevée sur un ou plusieurs étage(s) et elle est restituée à l'ensemble des étages. Lorsqu'un ou plusieurs étage(s) d'accumulateurs est ou sont un peu moins chargé(s), l'énergie n'est dès lors pas transférée en priorité à ce ou ces derniers qui en a ou ont besoin mais également à ou aux étages auxquels l'énergie est prélevée. L'équilibrage nécessite donc de prélever de l'énergie à l'ensemble des étages en fin de charge afin d'éviter de les charger à une tension trop élevée. L'équilibrage se fait donc à pertes élevées à cause du nombre de convertisseurs importants en fonctionnement. De plus, les accumulateurs déjà en fin de charge sont traversés par des composantes de courant alternatives ou continues non utiles.

On connaît par ailleurs du document US2008/0084184, un système de charge pour batterie, ce système comportant pour chaque étage d'accumulateurs de la batterie un dispositif de charge associé alimenté par un générateur de tension associé. Selon un mode de réalisation, un dispositif de charge comprend un pont de quatre diodes selon une configuration de redresseur pleine onde « Full-wave rectifier » en anglais.

En fonctionnement, le courant circule alternativement à travers deux premières diodes et à travers deux deuxièmes diodes, de sorte que l'étage associé est en permanence alimenté par un courant provenant du générateur de tension.

Cependant, avec une telle solution le courant provenant du générateur de tension peut ne pas être maîtrisé.

L'invention a donc pour objectif de proposer un dispositif d'équilibrage amélioré ne présentant pas ces inconvénients de l'état de l'art de la technique.

À cet effet, l'invention a pour objet un système d'équilibrage pour batterie comprenant au moins deux étages d'accumulateurs mis en série, chaque étage d'accumulateurs comprenant au moins un accumulateur caractérisé en ce que ledit système comporte :

- au moins un générateur de tension comprenant au moins un pôle positif et au moins un pôle négatif,
- pour chaque étage d'accumulateurs un dispositif de charge associé alimenté par ledit au moins un générateur de tension et comprenant : au moins une inductance, au moins un condensateur dont la première extrémité est connectée audit pôle positif dudit au moins un générateur de tension, au moins une diode connectée par son anode au pôle négatif dudit étage d'accumulateurs et par sa cathode à la première extrémité de ladite au moins une inductance, et au moins un interrupteur dont une extrémité est reliée à une extrémité de ladite au moins une inductance, et
- un dispositif de commande configuré pour contrôler ledit au moins un générateur de tension et pour fermer ledit au moins un interrupteur d'un dispositif de charge associé à un étage d'accumulateurs à charger, pour que ladite au moins une inductance emmagasine de l'énergie et pour transférer cette énergie audit étage d'accumulateurs associé.

Ledit système d'équilibrage peut en outre comporter une ou plusieurs caractéristiques suivantes, prises séparément ou en combinaison :

- la deuxième extrémité dudit au moins un condensateur est connectée à la première extrémité de l'inductance, la cathode de ladite au moins une diode est connectée à la deuxième extrémité du condensateur, et ledit au moins un interrupteur est connecté par sa première extrémité à la deuxième extrémité de l'inductance et par sa deuxième extrémité au pôle positif de l'étage d'accumulateurs associé,
- ledit dispositif de charge comporte au moins un premier condensateur dont la première extrémité est connectée audit pôle positif d'un générateur de tension et dont la deuxième extrémité est connectée à la première extrémité de l'inductance, au moins un deuxième condensateur dont la première extrémité est connectée audit pôle négatif dudit générateur de tension et dont la deuxième extrémité est connectée au pôle négatif de l'étage d'accumulateurs associé, et ladite au moins une diode est connectée par son anode et sa cathode respectivement à la deuxième extrémité dudit deuxième condensateur et à la deuxième extrémité dudit premier condensateur, et ledit au moins un interrupteur est connecté par sa première extrémité à la deuxième extrémité de l'inductance et par sa deuxième extrémité au pôle positif de l'étage d'accumulateurs associé,
- ledit dispositif de charge comporte au moins un premier condensateur dont la première extrémité est connectée audit pôle positif d'un générateur de tension, au moins un deuxième condensateur dont la première extrémité est connectée audit pôle négatif dudit générateur de tension et dont la deuxième extrémité est connectée à la deuxième extrémité de l'inductance et au pôle positif de l'étage d'accumulateurs associé, et ledit au moins un interrupteur est connecté par sa première extrémité à la deuxième extrémité du premier condensateur et par sa deuxième extrémité à la première extrémité de l'inductance,
- ledit dispositif de charge comporte au moins une première inductance et une deuxième inductance, au moins un premier condensateur dont la première extrémité est connectée audit pôle positif d'un générateur de tension et dont la deuxième extrémité est connectée à la première extrémité de la première inductance, au moins un deuxième condensateur dont la première extrémité est connectée audit pôle négatif dudit générateur de tension et dont la deuxième extrémité est connectée à la première extrémité de la deuxième inductance, au moins une première diode dont l'anode et la cathode sont respectivement connectées au pôle négatif de l'étage d'accumulateurs associé et à la première extrémité de la première inductance , au moins une deuxième diode dont l'anode et la cathode sont respectivement connectées au pôle négatif de l'étage d'accumulateurs associé et à la première extrémité de la deuxième inductance, et ledit au moins un interrupteur est connecté par sa première extrémité aux deuxièmes extrémités desdites inductances et par sa deuxième extrémité au pôle positif de l'étage d'accumulateurs associé,

- le dispositif de commande est configuré pour contrôler la vitesse de fermeture dudit au moins un interrupteur d'un dispositif de charge associé à un étage d'accumulateurs à charger, lorsqu'une tension est au préalable appliquée aux pôles dudit générateur de tension alimentant ledit dispositif de charge,
- ledit dispositif de charge est configuré pour fonctionner en conduction discontinue, indépendamment des niveaux de tensions de l'étage d'accumulateurs associé et de la batterie pendant la phase de charge,
- ledit système d'équilibrage comporte un unique générateur de tension pour alimenter l'ensemble desdits dispositifs de charge,
- ledit système d'équilibrage comporte un générateur de tension pour chaque dispositif de charge,
- ledit système d'équilibrage comporte au moins deux dispositifs générateurs de tension respectivement associés à un nombre prédéterminé de dispositifs de charge,
- ledit au moins un générateur de tension comporte au moins un interrupteur commandé par le dispositif de commande,
- ledit au moins un générateur de tension comporte un condensateur de découplage,
- ledit au moins un générateur de tension comporte deux interrupteurs commandés et deux inductances,
- ledit au moins un générateur de tension comporte un interrupteur et un transformateur,
- ledit au moins un générateur de tension comporte un pont de quatre interrupteurs et un transformateur,
- ledit au moins un générateur de tension comporte deux interrupteurs, un transformateur et deux condensateurs,
- ledit au moins un générateur de tension comporte deux interrupteurs et un transformateur à point milieu au primaire,
- le dispositif de commande est configuré pour fermer et ouvrir ledit au moins un interrupteur commandé dudit au moins un dispositif générateur de tension respectivement selon un temps de conduction et un temps d'ouverture constants pendant une phase de charge,
- le temps de conduction est calculé de sorte que ledit dispositif de charge fonctionne en conduction discontinue,
- ledit au moins un générateur de tension est connecté aux bornes de la batterie,
- ladite batterie comporte au moins un module élémentaire, chaque module élémentaire comprend une pluralité d'étages d'accumulateurs en série, et ledit système d'équilibrage comporte en outre un dispositif de charge supplémentaire aux bornes de chaque module élémentaire,
- ladite batterie comporte une pluralité de modules élémentaires disposés en série et ledit système d'équilibrage comporte un dispositif de charge supplémentaire aux bornes d'un nombre prédéterminé de modules élémentaires,
- ledit au moins un générateur de tension est connecté aux bornes dudit au moins un module élémentaire,
- ledit système d'équilibrage comporte un dispositif de mesure de la tension de chaque étage d'accumulateurs, configuré pour transmettre une information de tension au dispositif de commande,
- les accumulateurs sont de type lithium-ion,
- la batterie comporte des super-condensateurs.

L'invention concerne également un dispositif de charge d'un système d'équilibrage de charge tel que défini ci-dessus.

D'autres caractéristiques et avantages de l'invention apparaîtront plus clairement à la lecture de la description suivante, donnée à titre d'exemple illustratif et non limitatif, et des dessins annexés parmi lesquels :

- la figure 1 représente un schéma synoptique d'une batterie comportant une mise en série d'étages d'accumulateurs et d'un système d'équilibrage de charge de la batterie comportant un dispositif de charge par étage d'accumulateurs et un générateur de tension,
- la figure 2 représente un schéma synoptique d'une variante du système d'équilibrage de la figure 1 comprenant un générateur de tension pour chaque dispositif de charge,
- la figure 3 représente un schéma synoptique d'une autre variante du système d'équilibrage de la figure 1 comprenant un générateur de tension par module élémentaire comportant un nombre prédéterminé d'étages d'accumulateurs mis en série,
- la figure 4 représente un schéma synoptique d'une autre variante du système d'équilibrage de la figure 3 comprenant un dispositif de charge supplémentaire par module élémentaire,
- la figure 5 illustre un schéma synoptique d'un premier mode de réalisation d'un dispositif de charge du système d'équilibrage,

- la figure 6 illustre un schéma synoptique d'un exemple de réalisation d'un générateur de tension associé au dispositif de charge de la figure 5 en mode de conduction continue,
- la figure 7 illustre un schéma synoptique d'un exemple de réalisation d'un générateur de tension associé au dispositif de charge de la figure 5 en mode de conduction discontinue,
- la figure 8a représente un schéma synoptique du système d'équilibrage comprenant le dispositif de charge de la figure 5 et le générateur de tension de la figure 6, sur lequel on a indiqué la circulation du courant pendant un temps de conduction,
- la figure 8b représente un schéma synoptique du système d'équilibrage comprenant le dispositif de charge de la figure 5 et le générateur de tension de la figure 6, sur lequel on a indiqué la circulation du courant au bout du temps de conduction et jusqu'au blocage de la diode du dispositif de charge,
- la figure 8c représente un schéma synoptique du système d'équilibrage comprenant le dispositif de charge de la figure 5 et le générateur de tension de la figure 6, sur lequel on a indiqué la circulation du courant une fois la diode du dispositif de charge bloquée,
- la figure 9 est un diagramme représentant de façon schématique l'évolution des différents courants en fonction du temps dans le dispositif de charge de la figure 5 et dans l'étage d'accumulateurs en parallèle,
- la figure 10 illustre de façon schématique des courbes d'évolution des différents courants dans le dispositif de charge de la figure 5 et dans l'étage d'accumulateurs associé selon une première simulation,
- la figure 11 illustre de façon schématique des courbes d'évolution des différents courants dans le dispositif de charge de la figure 5 et dans l'étage d'accumulateurs associé selon une deuxième simulation,
- la figure 12 illustre un schéma synoptique d'un deuxième mode de réalisation d'un dispositif de charge du système d'équilibrage,
- la figure 13 illustre un schéma synoptique d'un exemple de réalisation d'un générateur de tension associé au dispositif de charge de la figure 12,
- la figure 14 est un schéma synoptique d'une variante de réalisation du générateur de tension de la figure 13,
- la figure 15A illustre un schéma synoptique du système d'équilibrage comprenant le dispositif de charge de la figure 12 et le générateur de tension de la figure 13, sur lequel on a indiqué la circulation du courant pendant le temps de conduction,
- la figure 15B illustre un schéma synoptique d'un circuit comprenant le dispositif de charge de la figure 12 et le générateur de tension de la figure 13, sur lequel on a indiqué la circulation du courant au bout du temps de conduction jusqu'à la période de fonctionnement,
- la figure 16 est un diagramme représentant de façon schématique l'évolution des différents courants en fonction du temps dans le dispositif de charge de la figure 12 et dans l'étage d'accumulateurs en parallèle,
- la figure 17 illustre de façon schématique des courbes d'évolution des différents courants dans le dispositif de charge de la figure 12 et dans l'étage d'accumulateurs associé,
- la figure 18 illustre un schéma synoptique d'un troisième mode de réalisation d'un dispositif de charge du système d'équilibrage,
- la figure 19A illustre un schéma synoptique du système d'équilibrage comprenant le dispositif de charge de la figure 18 et le générateur de tension de la figure 13, sur lequel on a indiqué la circulation du courant pendant le temps de conduction,
- la figure 19B illustre un schéma synoptique du système d'équilibrage comprenant le dispositif de charge de la figure 18 et le générateur de tension de la figure 13, sur lequel on a indiqué la circulation du courant au bout du temps de conduction jusqu'à la période de fonctionnement,
- la figure 20 illustre de façon schématique des courbes d'évolution des différents courants dans le dispositif de charge de la figure 18 et dans l'étage d'accumulateurs associé,
- la figure 21 illustre un schéma synoptique d'un quatrième mode de réalisation d'un dispositif de charge du système d'équilibrage,
- la figure 22A illustre un schéma synoptique d'une première variante de réalisation du dispositif de charge de la figure 21,
- la figure 22B illustre un schéma synoptique d'une deuxième variante de réalisation du dispositif de charge de la figure 21,
- la figure 23 illustre un schéma synoptique d'un exemple de réalisation d'un générateur de tension associé au dispositif de charge des figures 21 et 22A,22B,

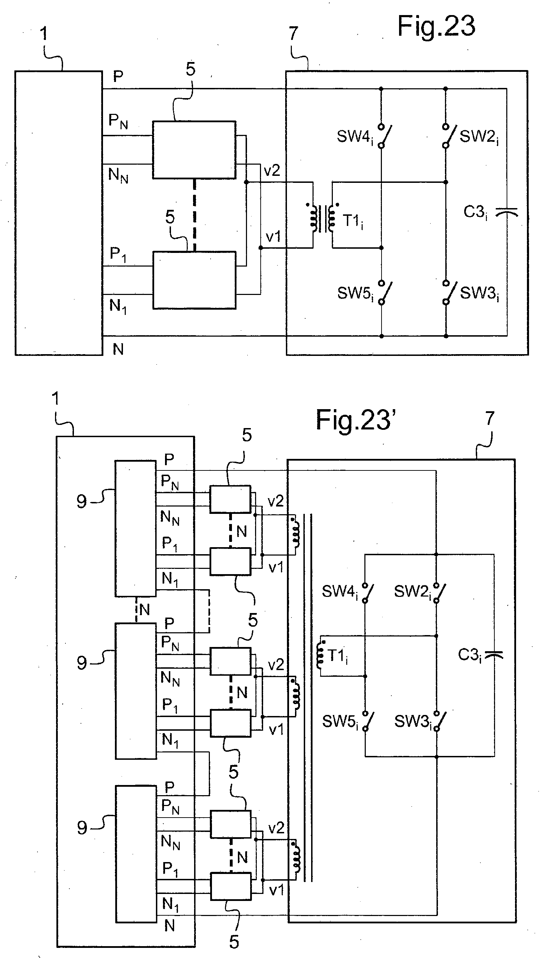

- la figure 23' illustre un schéma synoptique d'une variante de réalisation du générateur de tension de la figure 23,

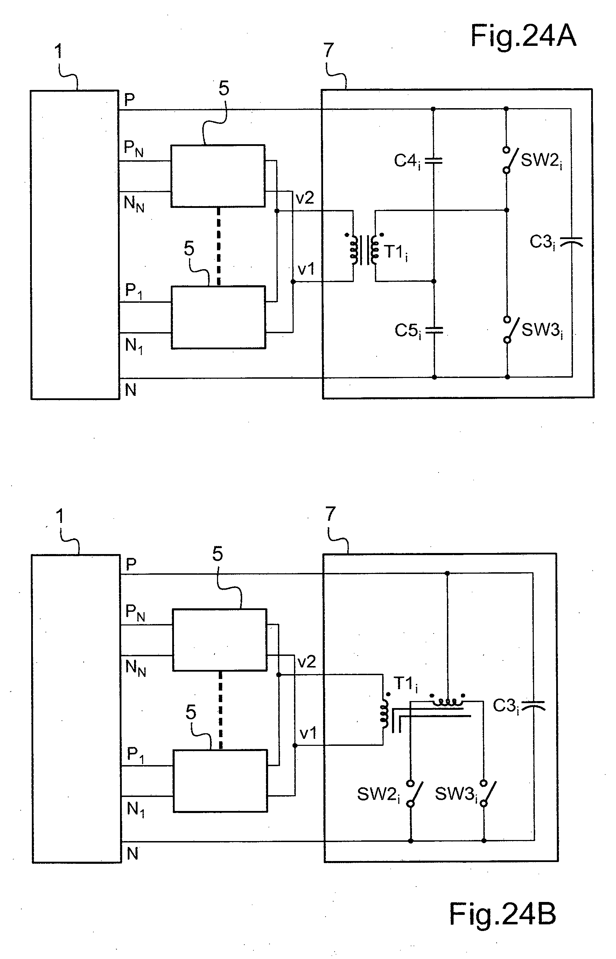

- la figure 24A est un schéma synoptique d'une variante de réalisation du générateur de tension de la figure 23,
- la figure 24B est un schéma synoptique d'une autre variante de réalisation du générateur de tension de la figure 23,

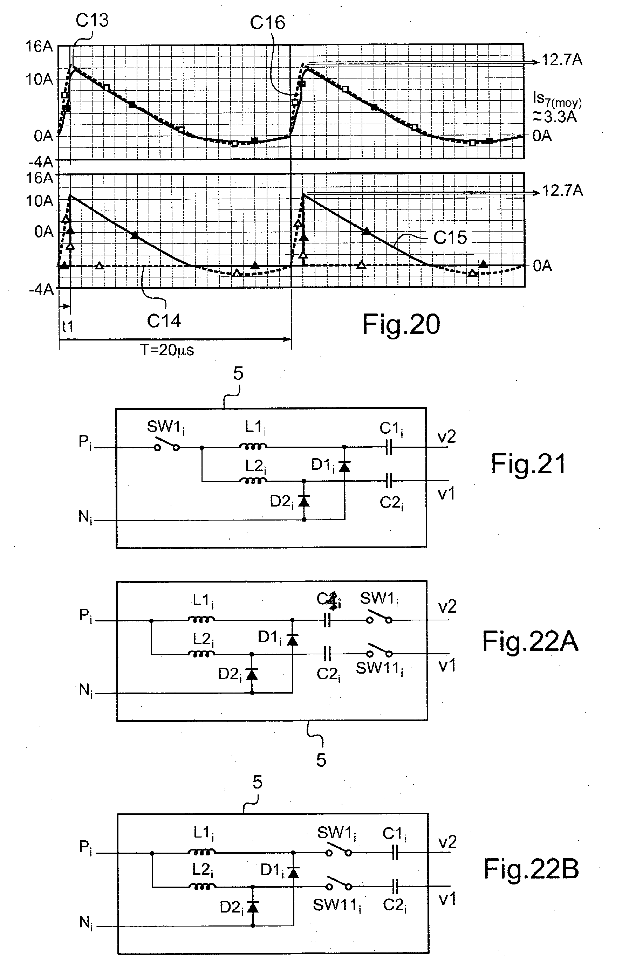

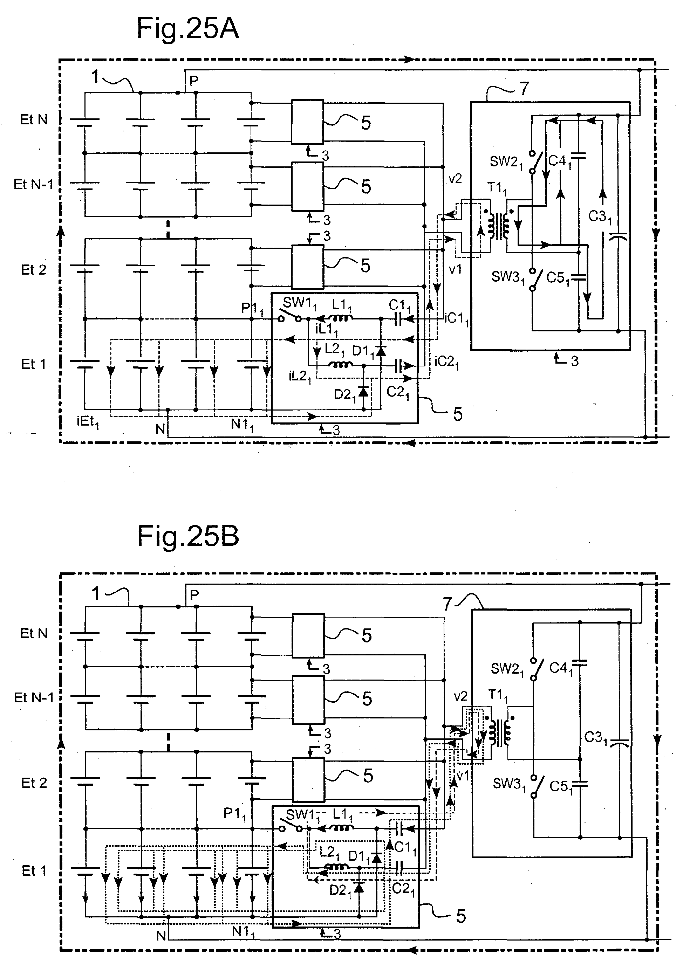

- la figure 25A illustre un schéma synoptique du dispositif d'équilibrage comprenant le dispositif de charge de la figure 21 et le générateur de tension de la figure 24A, sur lequel on a indiqué la circulation du courant pendant le temps de conduction,

- la figure 25B illustre un schéma synoptique du dispositif d'équilibrage comprenant le dispositif de charge de la figure 21 et le générateur de tension de la figure 24A, sur lequel on a indiqué la circulation du courant au bout du temps de conduction et jusqu'à la moitié de la période de fonctionnement,

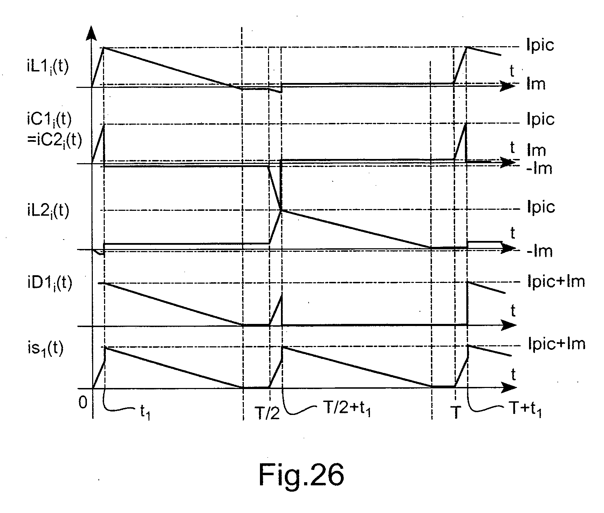

- la figure 26 est un diagramme représentant de façon schématique l'évolution des différents courants en fonction du temps dans le dispositif de charge de la figure 21,

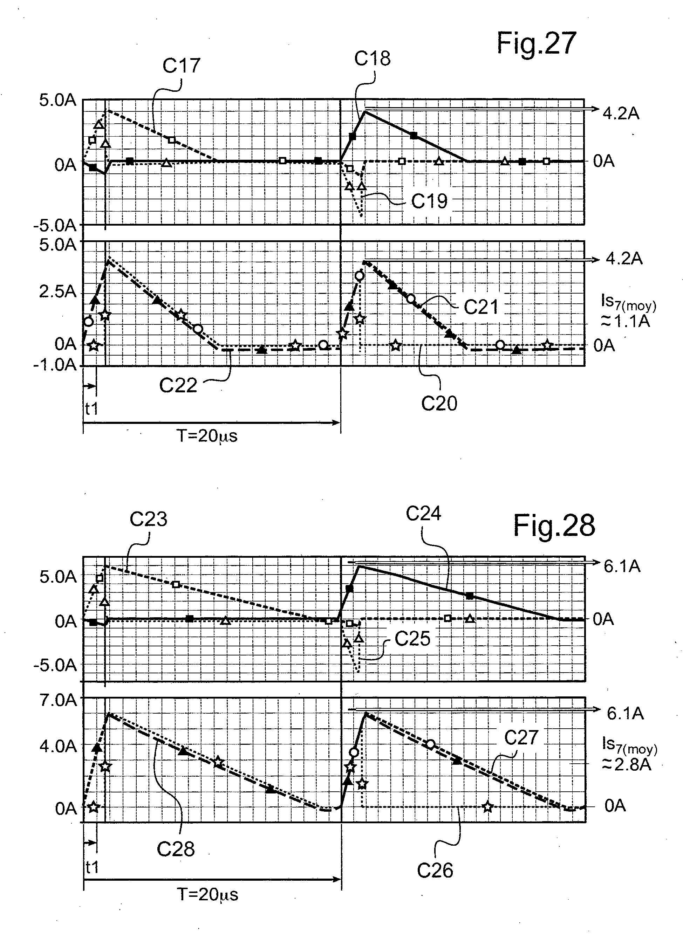

- la figure 27 illustre de façon schématique des courbes d'évolution des différents courants dans le dispositif de charge de la figure 21 et dans l'étage d'accumulateurs associé selon une première simulation, et
- la figure 28 illustre de façon schématique des courbes d'évolution des différents courants dans le dispositif de charge de la figure 21 et dans l'étage d'accumulateurs associé, selon une deuxième simulation.

Dans ces figures, les éléments sensiblement identiques portent les mêmes références.

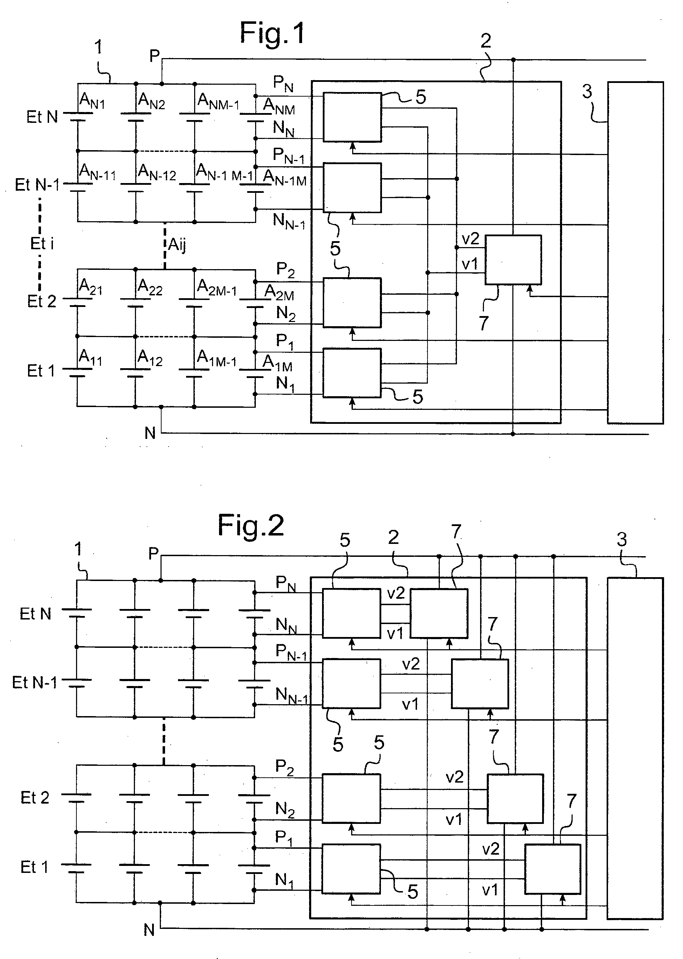

La figure 1 représente une batterie 1 d'accumulateurs. Cette batterie 1 est composée de N étages, notés $Et_i$, connectés en série. Chaque étage $Et_i$ est composé d'un accumulateur ou plusieurs accumulateurs $A_{ij}$ connectés en parallèle. L'indice i représente ici le numéro de l'étage, cet indice i varie dans l'exemple illustré sur la figure 1 de 1 à N, et l'indice j représente le numéro de chaque accumulateur dans un étage donné, cet indice j varie dans l'exemple illustré de 1 à M. Les bornes des accumulateurs $A_{ij}$ d'un même étage $Et_i$ sont raccordées ensemble par l'intermédiaire de connexions électriques, tout comme chaque étage $Et_i$ est également raccordé aux étages $Et_i$ adjacents par l'intermédiaire de connexions électriques.

L'invention a pour objet un système d'équilibrage de charge 2 pour une telle batterie 1 d'accumulateurs, comprenant au moins deux étages Et; mis en série.

Le système d'équilibrage 2 comporte de plus un dispositif de commande 3, une pluralité de dispositifs de charge 5 identiques par étages d'accumulateurs $Et_i$, et au moins un générateur de tension 7 comme illustré sur la figure 1. Les dispositifs de charge 5 et le ou les générateur(s) de tension 7 sont commandés par le dispositif de commande 3.

Le système d'équilibrage 2 peut comporter de plus un dispositif de mesure de tension (non représenté) pour mesurer la tension de chaque étage $Et_i$ et pour transférer une information de tension au dispositif de commande 3 qui peut à partir de cette information de tension déterminer si un étage d'accumulateur $Et_i$ doit être chargé et commander en conséquence le dispositif de charge 5 en parallèle de l'étage d'accumulateurs ainsi que le générateur de tension 7 associé. Chaque étage d'accumulateurs Et; est associé à un des dispositifs de charge 5, et, par exemple, à un seul générateur de tension 7.

Les dispositifs de charge 5 sont connectés d'une part au pôle négatif, noté $N_i$, et au pôle positif, noté $P_i$, de chaque étage d'accumulateurs $Et_i$, et d'autre part au pôle positif, noté v2, et au pôle négatif, noté v1, d'un ou plusieurs générateur(s) de tension 7.

Dans le cas d'un générateur de tension 7 unique (figure 1), ce dernier est connecté à l'ensemble des dispositifs de charge 5. Dans le cas de générateurs de tension 7 multiples, un générateur de tension 7 est connecté à un dispositif de charge 5 si le nombre de générateurs de tension 7 est égal au nombre d'étages $Et_i$, comme illustré à titre d'exemple sur la figure 2.

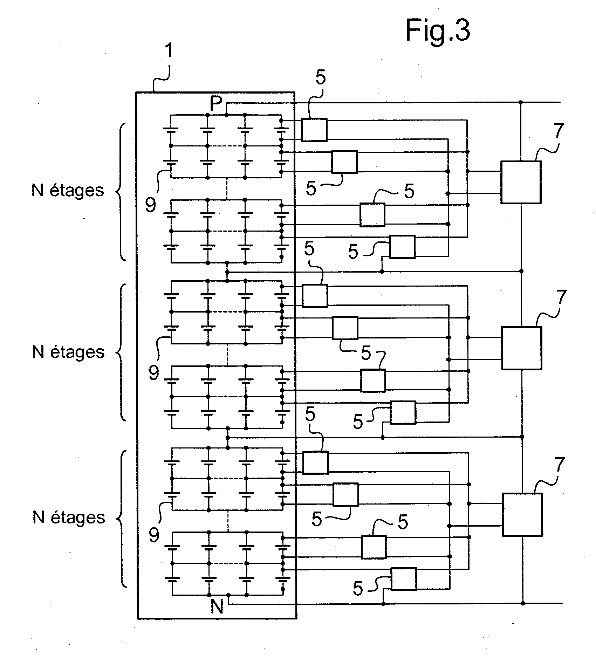

Selon une autre alternative représentée sur la figure 3, un générateur de tension 7 peut être connecté à plusieurs dispositifs de charge 5 si le nombre de générateurs de tension 7 est inférieur au nombre d'étages $Et_i$.

À titre d'exemple, lorsqu'un nombre conséquent d'étages d'accumulateurs $Et_i$ en série est utilisé, comme c'est le cas pour les véhicules électriques avec par exemple cent accumulateurs en série, la batterie 1 peut être constituée d'une mise en série de modules élémentaires 9 (figure 3), comprenant par exemple chacun dix à douze étages d'accumulateurs $Et_i$ mis en série. Ainsi, la connexion du ou des générateur(s) de tension 7 est faite aux bornes de dix à douze éléments. La tenue en tension des diodes et interrupteurs commandés est limitée, en fonction de la technologie de la batterie Li-ion, à environ 45 V - 60 V, qui est une valeur de tenue en tension standardisée dans le domaine du semi-conducteur. La maintenance d'un nombre conséquent de modules élémentaires 9, comme c'est le cas pour les véhicules électriques, est facilitée.

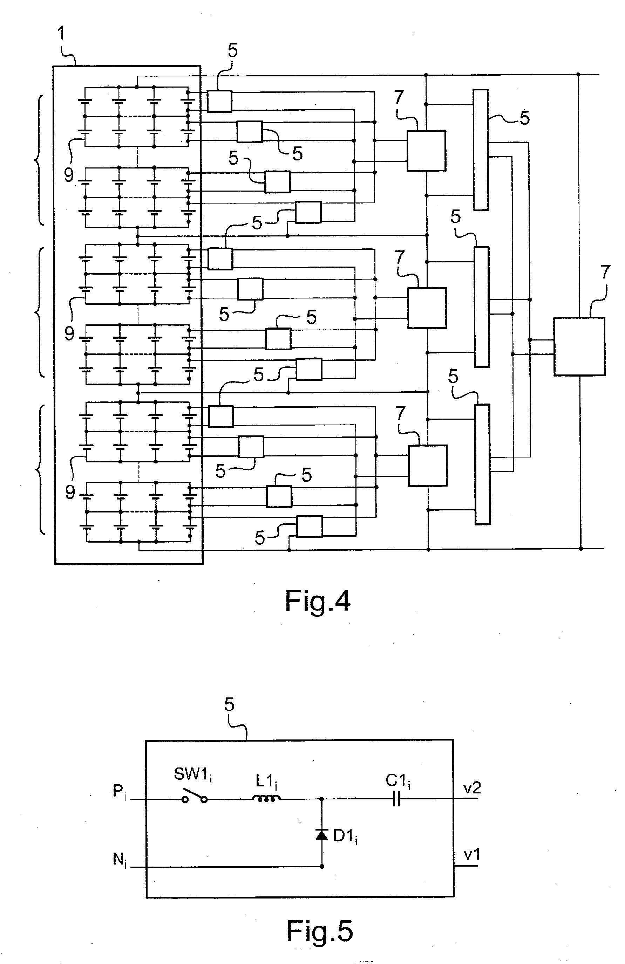

En outre, en plus des dispositifs de charge 5 par étages d'accumulateurs $Et_i$, on peut utiliser des dispositifs de charge 5 identiques par mise en série de N étages, comme l'illustre la figure 4. Cette variante permet de transférer de l'énergie entre les N étages adjacents, et donc entre les modules élémentaires 9 associés en série. Dans ce cas, un ou des générateur(s) de tension 7 supplémentaire(s), est ou sont utilisé(s) pour fournir l'énergie aux dispositifs de charge 5 connectés aux bornes de N étages.

Le ou les générateur(s) de tension 7 fournit ou fournissent aux dispositifs de charge 5 des impulsions de tension de polarité(s) positive, négative ou positive et négative et de forme pouvant être variée, par exemple créneau ou sinusoïdale.

**PREMIER MODE DE RÉALISATION**

On décrit maintenant un premier mode de réalisation d'un dispositif de charge 5 et d'un générateur de tension 7 du système d'équilibrage 2.

**Dispositif de charge**

En se référant à la figure 5, selon le premier mode de réalisation un dispositif de charge 5 comporte :

- une inductance $L1_i$,

- un condensateur $C1_i$ dont la première extrémité est connectée au pôle v2 d'un générateur de tension 7 et la deuxième extrémité est connectée à la première extrémité de l'inductance $L1_i$,

- une diode $D1_i$ dont l'anode et la cathode sont respectivement connectées au pôle $N_i$ de l'étage et à la deuxième extrémité du condensateur $C1_i$,

- un interrupteur $SW1_i$, par exemple un transistor MOSFET, dont la première extrémité est connectée à la deuxième extrémité de l'inductance $L1_i$ et la deuxième extrémité au pôle $P_i$ de l'étage.

Le dispositif de commande 3 permet de fermer et d'ouvrir l'interrupteur $SW1_i$.

Dans le cas où le pôle v1 du générateur de tension 7 est relié au pôle négatif N de la batterie 1 (figures 1 à 4), le dispositif de charge 5 selon ce premier mode de réalisation présente la particularité d'être connecté au pôle v1 du générateur de tension 7 par l'intermédiaire de l'étage d'accumulateur $Et_i$ auquel le dispositif de charge 5 est connecté et également par l'intermédiaire des étages d'accumulateurs situés en-dessous de cet étage $Et_i$. Un tel dispositif de charge 5 fonctionne aussi bien en régime de conduction continue que discontinue.

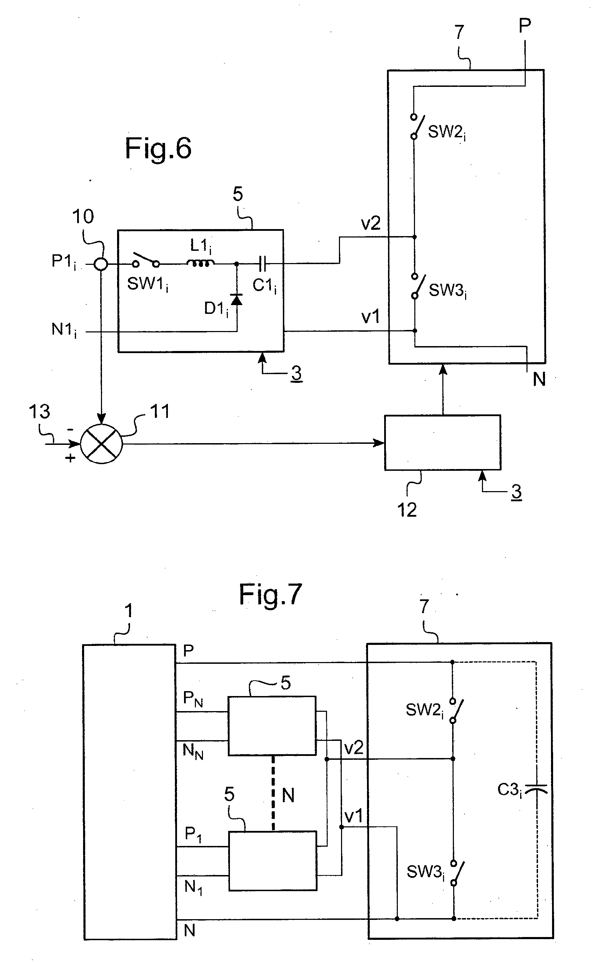

Le fonctionnement en régime de conduction discontinue est à privilégier car il présente l'avantage d'être plus facile de mise en oeuvre et de se faire à moindre coût. En effet, en mode de conduction discontinue, le courant à travers l'inductance $L1_i$ s'annule par définition avant chaque période T de fonctionnement du dispositif de charge 5. La valeur du courant traversant l'inductance $L1_i$ lorsque le générateur de tension 7 fournit de l'énergie peut être déduite de la tension appliquée aux bornes de l'inductance $L1_i$, du temps de stockage d'énergie dans l'inductance $L1_i$ et de la valeur de cette dernière. Suite à cela, la commande du générateur de tension 7 peut être faite par une commande à temps de conduction fixe. Par contre, en mode de conduction continue (figure 6), il serait nécessaire de mettre en oeuvre un capteur de courant 10 associé à une boucle de régulation 11 et à une variable de référence de courant 13, ainsi qu'à un dispositif de contrôle du courant 12, par exemple un découpage par transistor(s) fonctionnant en interrupteur(s), pour chacun des étages d'accumulateurs en série. En mode de conduction continue, un générateur de tension 7 serait nécessaire pour chaque dispositif de charge 5. la commande du générateur de tension 7 serait alors faite en modulation de largeur d'impulsion.

En conduction discontinue, la présente invention permet que l'ensemble des dispositifs de charge 5 soient connectés en parallèle les uns par rapport aux autres à la sortie d'un générateur de tension 7, grâce à l'isolation en continu apportée par les condensateurs $C1_i$.

Selon une variante de réalisation, on peut ajouter un condensateur (non représenté) en sortie de chaque dispositif de charge 5. Ce condensateur est connecté entre la borne $N_i$ et la première extrémité de l'interrupteur $SW1_i$. Un tel condensateur est configuré pour filtrer l'ondulation de courant issue du dispositif de charge 5. Un courant continu lissé est ainsi fourni à chaque étage d'accumulateurs lorsque le dispositif de charge 5 est en fonctionnement. On peut aussi modifier la position de l'interrupteur $SW1_i$ et le connecter en série avec le condensateur $C1_i$.

Deux autres positions de l'interrupteur $SW1_i$ sont possibles : l'interrupteur $SW1_i$ peut être connecté soit à la sortie v2 du générateur de tension 7 et à la première extrémité du condensateur $C1_i$, soit à la deuxième extrémité du condensateur $C1_i$ et à la cathode de la diode $D1_i$.

Une autre variante de réalisation consiste à utiliser pour chaque dispositif de charge 5 un interrupteur commandé à la place de chaque diode. Un redressement dit de type synchrone est alors possible. Le rendement du dispositif de charge 5 peut être augmenté grâce à la diminution de la chute de tension à l'état passant du composant.

**Générateur de tension**

Le générateur de tension 7 peut être de structures variées. Un mode de réalisation est adapté pour un générateur de tension 7 fournissant par exemple un créneau de tension positive uniquement.

Pour le dispositif de charge 5 selon le premier mode de réalisation, un exemple de mode de réalisation d'un générateur de tension 7 associé est illustré sur la figure 6. Il comporte deux interrupteurs SW2$_i$ et SW3$_i$, par exemple des transistors MOSFET, connectés aux bornes N et P de la batterie 1. Un condensateur C3$_i$, dit de découplage, peut être connecté aux bornes des deux interrupteurs SW2$_i$ et SW3$_i$. Le générateur de tension 7 peut être connecté aux bornes d'un module élémentaire 9 mais également aux bornes de la batterie 1, voire aux bornes d'une source auxiliaire (12 V véhicule par exemple).

**Fonctionnement**

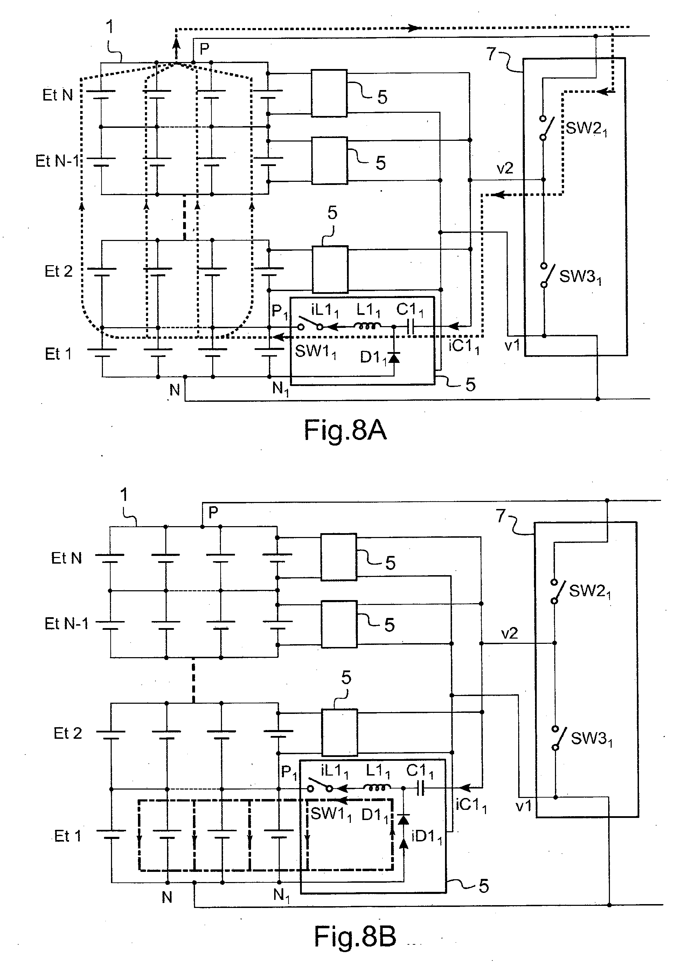

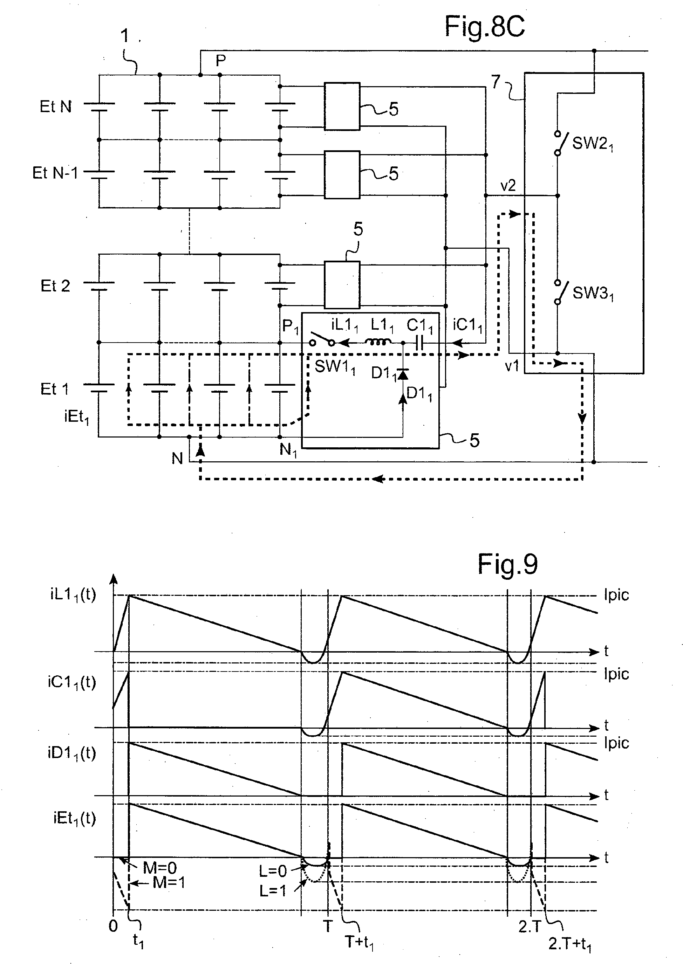

Le fonctionnement du premier mode de réalisation est décrit ci-après en référence aux figures 8a à 8c et 9. Les dispositifs de charge 5 permettent de poursuivre la charge de certains étages en charge. Le fonctionnement du montage en régime de conduction discontinue est préféré pour les raisons décrites précédemment.

Par exemple, lorsque le dispositif de commande 3 commande le transfert d'énergie à un étage Et$_i$, par exemple à l'étage Et$_1$ l'interrupteur SW1$_1$ du dispositif de charge 5 en parallèle de l'étage Et$_i$ correspondant est fermé par le dispositif de commande 3. Le générateur de tension 7, alimentant le dispositif de charge 5, est également activé par le dispositif de commande 3.

Les étages en série avec l'étage Et$_1$ ne sont pas chargés tant que l'interrupteur SW1$_1$ des dispositifs de charge 5 en parallèle de chaque étage reste à l'état ouvert.

Lorsqu'un dispositif de charge 5 est mis en fonctionnement et que le générateur de tension 7 fonctionnait au préalable, la vitesse de fermeture de l'interrupteur SW1$_1$ doit être contrôlée afin d'éviter de fournir un courant trop important à l'étage.

Les interrupteurs sont considérés comme parfaits lorsqu'ils sont à l'état bloqué et ne laissent donc passer aucun courant lorsqu'ils sont dans cet état.

**Première variante : générateur de tension sans condensateur de découplage**

On considère le générateur de tension 7 de la figure 6 sans le condensateur de découplage C3$_i$ aux bornes des interrupteurs SW3$_i$ et SW2$_i$.

En se référant aux figures 8a à 8c et 9, pendant un temps de conduction t1, une tension positive est appliquée entre les bornes v2 et v1 du générateur de tension 7. L'interrupteur SW2$_1$ est fermé et l'interrupteur SW3$_1$ est ouvert. Le générateur de tension 7 fournit donc un créneau de tension positive tant que l'interrupteur SW2$_1$ est fermé et que l'interrupteur SW3$_1$ est ouvert.

La circulation du courant pendant le temps t1 est illustrée de façon schématique sur la figure 8a par des flèches en pointillés. De l'énergie est emmagasinée dans l'inductance L1$_1$ Un condensateur C1$_1$ de valeur suffisamment importante est nécessaire pour transmettre suffisamment de courant et imposer une tension quasi-constante aux bornes de l'inductance L1$_1$. Le courant à travers l'inductance L1$_1$ croît proportionnellement à la tension appliquée à ses bornes, égale approximativement à la tension de la batterie 1 moins la tension de l'étage Et$_1$ en charge. Le courant traverse les étages situés au-dessus de l'étage Et$_1$. Pendant cette phase, la diode D1$_1$ est bloquée. La tension aux bornes de la diode D1, est égale à moins la tension de la batterie 1.

Au bout du temps t1, la tension de sortie du générateur de tension 7 devient nulle. L'interrupteur SW2$_1$ du générateur de tension 7 s'ouvre. L'interrupteur SW3$_1$ est fermé lorsque l'interrupteur SW2$_1$ est totalement ouvert. Le courant dans l'inductance L1$_1$ atteint à cet instant une valeur pic Ipic (figure 9), égale approximativement à la tension appliquée aux bornes de l'inductance lorsque le générateur de tension 7 fournit de l'énergie, multipliée par t1 et divisée par la valeur de l'inductance. Cette formule est approximative dans la mesure où elle considère que le courant dans l'inductance est nul avant chaque période de fonctionnement du dispositif de charge 5.

Le dispositif de charge 5 présente la particularité d'avoir un courant à travers l'inductance L1$_1$ qui devient négatif et oscille par la suite entre valeurs négative et positive lorsque la diode D1$_1$ se bloque, donc avant chaque période T de fonctionnement du dispositif de charge 5. Cette particularité est une nécessité dans la mesure où le courant moyen à travers le condensateur C1$_1$ doit être nul pour chaque période T de fonctionnement du dispositif de charge 5 en régime permanent.

Au bout du temps t 1 et jusqu'au blocage de la diode D1$_1$, le générateur de tension 7 impose une tension nulle aux bornes v2 et v1. L'interrupteur SW3$_1$ est fermé et l'interrupteur SW2$_1$ est ouvert. La circulation du courant durant cette phase est illustrée de façon schématique sur la figure 8b par des flèches formées d'une alternance de tirets et de points.

Le courant à travers l'inductance L1$_1$ décroît proportionnellement à la tension appliquée à ses bornes, égale à moins la tension de l'étage Et$_1$ d'accumulateurs moins la chute de tension à l'état passant de la diode D1$_1$. La diode D1$_1$ est passante pendant cette phase jusqu'à ce que le courant à travers cette dernière s'annulé. La circulation du courant une fois la diode D1$_1$ bloquée est représentée de façon schématique sur la figure 8c par des flèches formées de tirets.

Comme expliqué précédemment, le courant dans l'inductance $L1_1$ devient négatif après la conduction de la diode $D1_1$ et oscille par la suite entre valeurs négative et positive (figure 9). La fréquence d'oscillations du courant pendant cette phase est définie approximativement par la fréquence de résonance propre entre le condensateur $C1_1$ et l'inductance $L1_1$. Ce courant traverse l'étage en charge $Et_1$, les étages situés en-dessous de l'étage $Et_1$, le condensateur $C1_1$ l'inductance $L1_1$ et l'interrupteur $SW3_1$.

A la fin de la période T, une nouvelle séquence de fonctionnement commence si l'interrupteur $SW1_1$ est toujours à l'état fermé. Le générateur de tension 7 est commandé de manière à ne pas avoir les deux interrupteurs $SW2_1$ et $SW3_1$ passants en même temps afin d'éviter un court-circuit de la batterie. Entre l'ouverture de l'interrupteur $SW3_1$ et la fermeture de l'interrupteur $SW2_1$, il est impératif que le courant dans l'inductance $L1_1$ soit nul ou positif pour permettre la continuité du courant à travers la diode $D1_1$. La fréquence de résonance propre entre le condensateur $C1_1$ et l'inductance $L1_1$ doit être prise en considération pour le dimensionnement du dispositif. Si le courant à travers l'inductance $L1_1$ devrait être négatif, il faudrait alors choisir l'interrupteur $SW2_1$ bidirectionnel en courant par exemple par l'intermédiaire d'une diode connectée de façon antiparallèle à $SW2_1$.

### Seconde variante : générateur de tension avec condensateur de découplage

Dans le cadre de l'utilisation du condensateur de découplage $C3_i$ (figure 6) aux bornes des interrupteurs $SW3_i$ et $SW2_i$, la circulation du courant est modifiée lorsque l'interrupteur $SW2_i$ est fermé. En effet, le condensateur $C3_i$ fournit également une partie du courant qui traverse l'inductance $L1_i$. Ce courant est rebouclé par l'étagé Eti en charge et par les étages situés en-dessous de l'étage $Et_i$ en charge. La valeur du courant fourni dépend de la position de l'étage $Et_i$ en charge par rapport aux N étages. Plus l'étage $Et_i$ est proche de la borne N de la batterie, plus la valeur de courant fourni par le condensateur $C3_i$ est importante par rapport au courant qui traverse les étages situés au-dessus de l'étage $Et_i$ en charge.

### Dimensionnement

### Mise en équations

Le dimensionnement du dispositif de charge 5 (figure 5) découle de la mise en équations de son fonctionnement tel que décrit ci-dessus. La mise en équations est effective pour le générateur de tension 7 (figure 6) associé. La mise en équations ci-dessous est généralisée. Pour cela, les tensions d'entrée et de sortie sont respectivement appelées Ve et Vs. Ve représente la tension entre les bornes N et P de la batterie 1. La tension Vs représente la tension entre les bornes $N_i$ et $P_i$ d'un étage d'accumulateurs $Et_i$.

Pour un dimensionnement simple, la tension aux bornes du condensateur $C1_i$ si elle existe est considérée comme constante sur une période T de fonctionnement du dispositif de charge 5.

Pendant le temps t1, le courant croît dans l'inductance $L1_i$ ($iL1_i$). Le courant est considéré nul à chaque période T de fonctionnement. En négligeant la chute de tension à l'état passant des interrupteurs $SW2_i$ et $SW1_i$ et en considérant la chute de tension Vd à l'état passant de la diode $D1_i$, le courant $iL1_i(t)$ s'écrit :

$$iL1_i(t) = \frac{Ve - Vs - Vd}{L1_i} \times t \quad \text{(équation 1)}$$

Au bout du temps t1, l'interrupteur $SW2_i$ s'ouvre. Le courant dans l'inductance atteint la valeur pic de :

$$iL1_i(t1) = Ipic = \frac{Ve - Vs - Vd}{L1_i} \times t1 \quad \text{(équation 2)}$$

Au bout du temps t1 jusqu'à l'annulation du courant dans $L1_i$, la diode $D1_i$ conduit. Le courant dans l'inductance $L1_i$ décroît suivant la loi suivante.

$$iL1_i(t) = -\frac{Vs + Vd}{L1_i} \times t + Ipic \quad \text{(équation 3)}$$

A partir de l'équation 3, le temps de conduction t1 à ne pas dépasser (t1$_{(max)}$) pour que le dispositif de charge 5 fonctionne en conduction discontinue peut être défini. Le courant dans l'inductance doit être nul ou positif avant chaque période T de fonctionnement. La période propre d'oscillations entre le condensateur C1$_i$ et l'inductance L1$_i$ est prise en compte dans la définition de l'équation 4. Le temps t1$_{(max)}$ dépend de deux termes A et B. Pour considérer le pire cas, le terme A est à évaluer pour la tension d'entrée Ve maximale et la tension de sortie Vs minimale. Le terme B dépend des tensions d'entrée et de sortie ainsi que du courant moyen de sortie (Is$_{i(moy)}$. Le terme B est constant et peut donc être évalué soit pour des tensions d'entrée maximale et de sortie minimale et un courant moyen de sortie maximal ou soit, inversement, pour des tensions d'entrée minimale et de sortie maximale et un courant moyen de sortie minimal.

$$t1_{(max)} = T \times \frac{1}{\dfrac{1}{A} + B} \qquad \text{(équation 4)}$$

$$\text{Avec} \quad A = \frac{Vs + Vd}{Ve}$$

$$B = \pi \times \sqrt{\frac{1}{2 \times T} \times \frac{C}{(Vs + Vd) \times Is_{i(moy)}}} \times (Ve - Vs - Vd)$$

Le courant de sortie du dispositif de charge est égal au courant à travers l'inductance L1$_i$. Le courant moyen de sortie d'un dispositif de charge 5 est calculé à partir de l'équation 5. Étant donné que le courant moyen à travers le condensateur C1$_i$ est nul en régime permanent, le courant moyen de sortie (Is$_{i(moy)}$) est égal au courant moyen à travers la diode D1$_i$. Le courant Is$_{i(moy)}$ est proportionnel à la tension d'entrée Ve au carré et inversement proportionnel à la tension de sortie Vs. Pour fournir le courant moyen désiré quelle que soit la tension de l'étage d'accumulateurs et pour un temps t1 donné, la tension de sortie maximale et la tension d'entrée minimale doivent être prises en compte.

$$Is_{i(moy)} = \frac{1}{2} \times \frac{1}{T} \times \frac{L1_i}{(Vs + Vd)} \times Ipic^2 = \frac{1}{2} \times \frac{1}{T} \times \frac{(Ve - Vs - Vd)^2 \times t1^2}{(Vs + Vd) \times L1_i} \quad \text{(équation 5)}$$

Le courant dans un étage chargé Et$_i$, noté iEt$_i$(t), dépend du nombre de dispositif(s) de charge 5 en fonctionnement et du positionnement de ces derniers par rapport à l'étage Et$_i$.

Si seul le dispositif de charge 5 en parallèle de l'étage Et$_i$ fonctionne, le courant à travers l'étage Et$_i$ est donc égal au courant à travers l'inductance L1$_i$ entre t1 et T et est nul le reste du temps. Cette variante est représentée en trait plein sur la figure 9.

En considérant L, le nombre de dispositif(s) de charge 5 en fonctionnement situés au-dessus de l'étage Et$_i$, un courant supplémentaire traverse l'étage Et$_i$ lorsque la diode D1$_i$ des dispositifs de charge correspondants se bloque. Durant cette phase et en considérant les dispositifs de charge identiques, le courant iEt$_i$(t) est égal au courant à travers un condensateur C1$_i$ multiplié par le nombre de dispositif(s) L en fonctionnement plus un. Cette variante est représentée en pointillés sur la figure 9, pour L=1.

En considérant M, le nombre de dispositif(s) de charge en fonctionnement situés en-dessous de l'étage Et$_i$, un courant supplémentaire traverse l'étage Et$_i$ pendant le temps t1. Durant cette phase et en considérant les dispositifs de charge identiques, le courant iEt$_i$(t) est égal à l'opposé du courant à travers une inductance L1$_i$ multiplié par le nombre de dispositif(s) M en fonctionnement. Cette variante est représentée en tirets sur la figure 9, pour M=1.

La valeur moyenne du courant à travers l'étage chargé (IEt$_{(moy)}$) est obtenue à l'aide de l'équation 6.

$$IEt_{i(moy)} = \frac{1}{2} \times \frac{1}{T} \times Ipic \times \left[ \frac{Ipic \times L1_i}{Vs + Vd} - t1 \times (1 + L + M) \right] \qquad \text{(équation 6)}$$

**Exemple**

À titre d'exemple, chaque dispositif de charge 5 permet de poursuivre la charge d'un étage d'accumulateurs Et$_i$ et est connecté aux bornes de dix étages. Un unique générateur de tension 7 est considéré pour alimenter l'ensemble des dispositifs de charge. Ce dernier est connecté aux bornes d'une association série de dix étages.

Le dimensionnement est divisé en 2 étapes. Premièrement, le temps t1 de conduction maximal de l'interrupteur SW2$_i$ du générateur de tension 7 est calculé pour un fonctionnement du dispositif de charge en conduction discontinue. Deuxièmement, la valeur maximale de l'inductance L1$_i$ pour fournir en sortie du dispositif de charge le courant moyen désiré est définie.

Les hypothèses sont les suivantes :

- courant moyen de sortie (minimum, Is$_{i(moy)}$) : 1 A
- fréquence de fonctionnement typique (F) : 50 kHz, soit T = 1/F = 20 $\mu$s
- tension d'un accumulateur (Li-ion à base de phosphate de fer) :

  - Tension minimale : 2.5 V

  - Tension maximale : 3.6 V

- chute de tension à l'état passant des diodes (Vd) : 0.3 V - 0.7 V.

Le condensateur C1$_i$ est dimensionné pour transmettre suffisamment de courant et imposer une tension quasi-constante aux bornes de l'inductance L1$_i$ du dispositif de charge 5. En considérant une chute de tension de l'ordre de 3 V, pour un courant pic de l'ordre de 6 A et un temps t1 de 2.0 $\mu$s, la valeur du condensateur est de l'ordre de 2 $\mu$F. Typiquement, la valeur du condensateur est de l'ordre de 1 $\mu$F à 10 $\mu$F.

Les valeurs maximales du temps t1 et de l'inductance L1$_i$ sont calculées ci-dessous. Le temps t1$_{(max)}$ est calculé en utilisant pour le calcul du terme A, la chute de tension minimale de la diode D1$_i$, les tensions d'entrée maximale et de sortie minimale du dispositif de charge et pour le calcul du terme B, le courant moyen de sortie minimal et les tensions d'entrée minimale et de sortie maximale et un condensateur d'isolation fixé à 2 $\mu$F. L'inductance maximale L1$_i$ est calculée en utilisant les mêmes conditions que celles utilisées pour le calcul du terme B de t1$_{(max)}$. Le temps t1$_{(max)}$ est utilisé pour le calcul de l'inductance L1$_i$ afin de minimiser le courant pic et le courant efficace à travers l'inductance, les interrupteurs et les diodes. Mais pour des raisons de robustesse, des valeurs plus faibles peuvent être utilisées. L'utilisation d'un condensateur de filtrage en sortie du dispositif de charge ne modifie pas le dimensionnement du temps t1$_{(max)}$ et de l'inductance L1$_i$.

$$t1_{(max)} = T \times \cfrac{1}{\cfrac{1}{A} + B} = T \times \cfrac{1}{\cfrac{1}{\frac{Vs+Vd}{Ve}} + \pi \times \sqrt{\frac{1}{2 \times T} \times \frac{C}{(Vs+Vd) \times Is_{i(moy)}}} \times (Ve - Vs - Vd)}$$

$$= \frac{1}{50 \times 10^3} \times \cfrac{1}{\cfrac{1}{\frac{2.5+0.3}{9 \times 3.6 + 2.5}} + \pi \times \sqrt{\frac{50 \times 10^3}{2} \times \frac{2 \times 10^{-6}}{(3.6+0.7) \times 1}} \times (9 \times 2.5 - 0.7)}$$

(équation 4)

$$tl_{(max)} = 1.0\,\mu s$$

$$LI_{i(max)} = \frac{1}{2} \times \frac{1}{T} \times \frac{(Ve - Vs - Vd)^2 \times tl^2}{(Vs + Vd) \times Is_{i(moy)}} \qquad \text{(équation 5)}$$

$$= \frac{1}{2} \times 50 \times 10^3 \times \frac{(2.5 \times 9 - 0.7)^2 \times (1.0 \times 10^{-6})^2}{(3.6 + 0.7) \times 1}$$

$$LI_{i(max)} = 2.8\,\mu H$$

**Simulations**

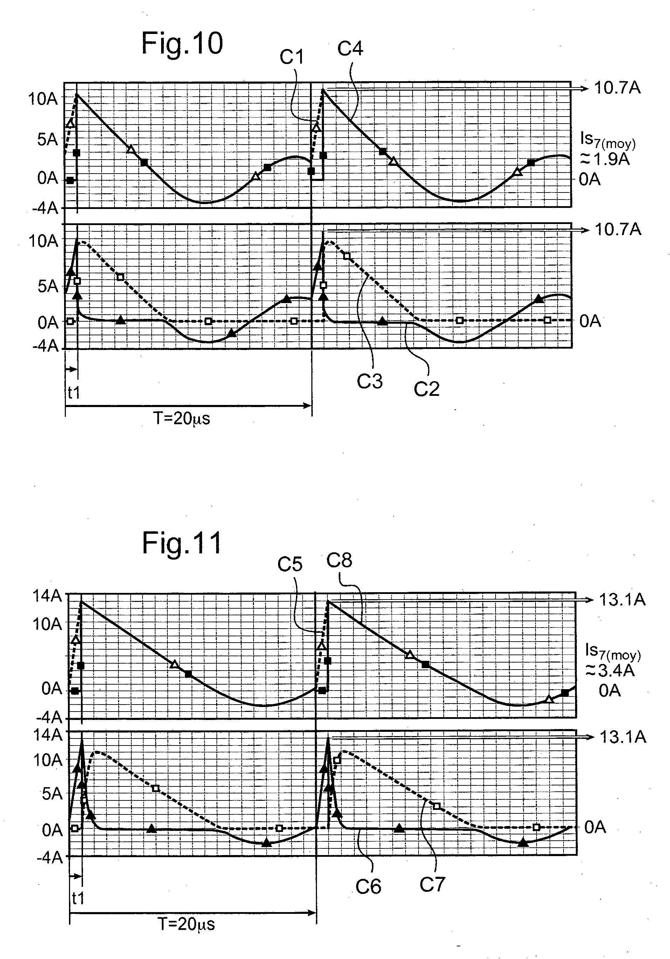

Pour cet exemple, deux résultats de simulation sont illustrés sur les figures 10 et 11.

Première simulation (figure 10) :

Pour la première simulation, les accumulateurs $A_{ij}$ sont chargés pour la majorité à la tension de seuil de 2.5 V et pour un seul accumulateur par exemple à l'étage 7, à la tension de 3.6 V. Le dispositif de charge 5 est connecté en parallèle de cet accumulateur qui présente la tension de charge la plus élevée, soit 3.6 V. Le générateur de tension 7 simulé est le générateur représenté sur la figure 6 sans le condensateur de découplage $C3_i$. Le premier résultat illustre le cas extrême de fonctionnement pour lequel le courant moyen de sortie doit être au minimum de 1 A.

La figure 10 présente le résultat de cette première simulation où l'on peut visualiser les courants à travers l'inductance $L1_7$ sur la courbe C1, le condensateur $C1_7$ sur la courbe C2, la diode $D1_7$ sur la courbe C3, et l'accumulateur qui a la tension de charge la plus élevée sur la courbe C4.

Comme décrit dans le fonctionnement précédemment, le courant croît dans l'inductance $L1_7$ pendant un temps t1. Pendant ce temps t1, le courant ne traverse pas l'accumulateur en charge mais traverse les accumulateurs situés au-dessus de ce dernier. La diode $D1_7$ est durant cette phase bloquée.

Au bout du temps t1, la valeur du courant atteint une valeur pic, de l'ordre de 10.7 A dans notre exemple. À partir de t1, le courant dans l'inductance décroît et est fourni à l'accumulateur. La diode $D1_7$ conduit et permet la démagnétisation de l'inductance $L1_7$. Le montage fonctionne en régime de conduction discontinue car le courant dans l'inductance $L1_7$ s'annule avant chaque période de fonctionnement du dispositif. Le courant à travers l'inductance $L1_7$, et donc également à travers l'accumulateur à charger, devient négatif lorsque la diode $D1_7$ se bloque, i.e. lorsque le courant $iD1_7$ s'annule. Ce courant $iL1_7$ oscille à une fréquence proche de la fréquence propre d'oscillations entre le condensateur $C1_7$ et l'inductance $L1_7$. Ce courant $iL1_7$ traverse l'inductance $L1_7$, l'accumulateur en charge ainsi que les accumulateurs situés en-dessous de l'étage en charge, le condensateur $C1_7$, et l'interrupteur $SW3_1$. Le courant moyen en régime permanent à travers le condensateur $C1_7$ est ainsi nul sur une période de fonctionnement.

Le courant moyen de sortie $Is_{7(moy)}$ est égal à environ 1.9 A. Un courant moyen minimum de 1 A est respecté quelles que soient la valeur de tension de l'accumulateur chargé et la valeur de tension de la batterie d'accumulateurs. Le courant est supérieur à la valeur désirée principalement car le courant à chaque période T n'est pas égal à 0 comme supposé dans le dimensionnement du dispositif. Le courant pic à travers l'inductance est donc supérieur à la valeur nécessaire pour fournir un courant moyen de sortie de 1 A. Le courant moyen étant proportionnel au courant pic à travers l'inductance élevé au carré et donc impacté de manière conséquente (équation 5).

**Deuxième simulation (figure 11) :**

Pour la deuxième simulation, les accumulateurs sont chargés pour la majorité à la tension de seuil de 3.6 V et pour un seul accumulateur, par exemple le septième, à la tension de 2.5 V. Le dispositif de charge 5 est connecté en parallèle de cet accumulateur qui présente la tension de charge la plus faible, soit 2.5 V. Le dispositif de charge est donc connecté aux bornes du septième étage $Et_7$.

Le deuxième résultat illustre le cas extrême de fonctionnement pour lequel le dispositif de charge doit fonctionner en mode de conduction discontinue et le courant à travers l'inductance $L1_i$ doit être nul ou positif avant chaque période de fonctionnement T.

La figure 11 présente le résultat de cette deuxième simulation où l'on peut visualiser les courants à travers l'inductance $L1_7$ sur la courbe C5, le condensateur $C1_7$ sur la courbe C6, la diode $D1_7$ sur la courbe C7, et l'accumulateur qui présente la plus faible tension de charge sur la courbe C8.

Le montage fonctionne en mode de conduction discontinue car le courant à travers l'inductance $L1_i$ s'annule avant chaque période de fonctionnement T du dispositif. Le fonctionnement en conduction discontinue et à courant à travers l'inductance $L1_i$ positif ou nul est respecté quelles que soient la valeur de tension de l'accumulateur chargé et la valeur de tension de la batterie d'accumulateurs.

Le courant moyen de sortie $Is_{7(moy)}$ est égal à environ 3.4 A. Il est supérieur à la valeur minimum de 1 A. A travers les étages situés au-dessus et en-dessous de l'étage en charge, le courant efficace s'élève à environ 1.7 A et le courant moyen est égal à environ 330 mA.

## DEUXIÈME MODE DE RÉALISATION

On décrit maintenant un deuxième mode de réalisation pour le système d'équilibrage 2.

### Dispositif de charge

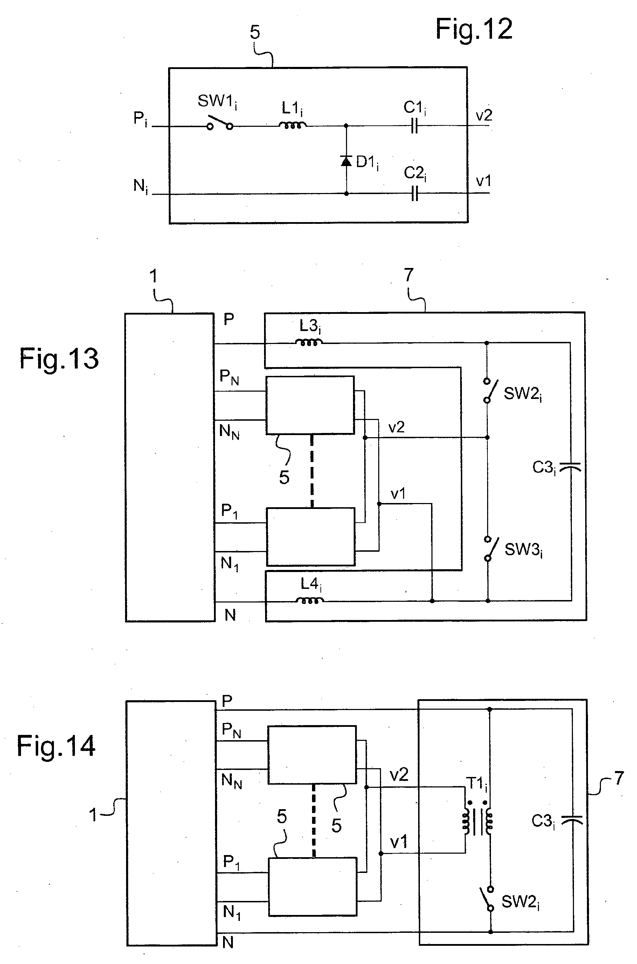

Comme l'illustre la figure 12, le dispositif de charge 5 selon le deuxième mode de réalisation diffère du premier mode de réalisation illustré sur la figure 5, par le fait qu'il comporte un deuxième condensateur $C2_i$ dont la première extrémité est connectée au pôle v1 du générateur de tension 7 auquel est connecté le premier condensateur $C1_i$ et dont la deuxième extrémité est connectée au pôle $N_i$ de l'étage $Et_i$. Ce condensateur $C2_i$ permet d'assurer un retour du ou d'une partie du courant fourni par le générateur de tension 7.

### Générateur de tension

Ce deuxième mode de réalisation est également adapté pour un générateur de tension 7 fournissant par exemple un créneau de tension positive uniquement.

Pour le dispositif de charge 5 selon ce deuxième mode de réalisation, on peut prévoir deux variantes de réalisation d'un générateur de tension 7 respectivement illustrées sur les figures 13 et 14.

### Première variante (figure 13) :

Ce générateur de tension 7 diffère du générateur de tension 7 selon le premier mode de réalisation représenté sur la figure 6, par le fait que deux inductances $L3_i$ et $L4_i$ sont implémentées en série avec les bornes N et P de la batterie 1. On force ainsi le passage du courant à travers les deuxièmes condensateurs $C2_i$ des dispositifs de charge 5 lorsque l'interrupteur $SW3_i$ ou $SW2_i$ du générateur de tension 7 est fermé. Le condensateur $C3_i$, dit de découplage, doit être connecté aux bornes des deux interrupteurs.

### Seconde variante (figure 14) :

Le générateur de tension 7 représenté sur la figure 14 comporte quant à lui un condensateur de découplage $C3_i$, un interrupteur $SW2_i$ et un transformateur $T1_i$. Ce générateur de tension 7 présente l'avantage de minimiser le nombre de composants par rapport au générateur de tension 7 de la figure 13 selon la première variante.

### Fonctionnement

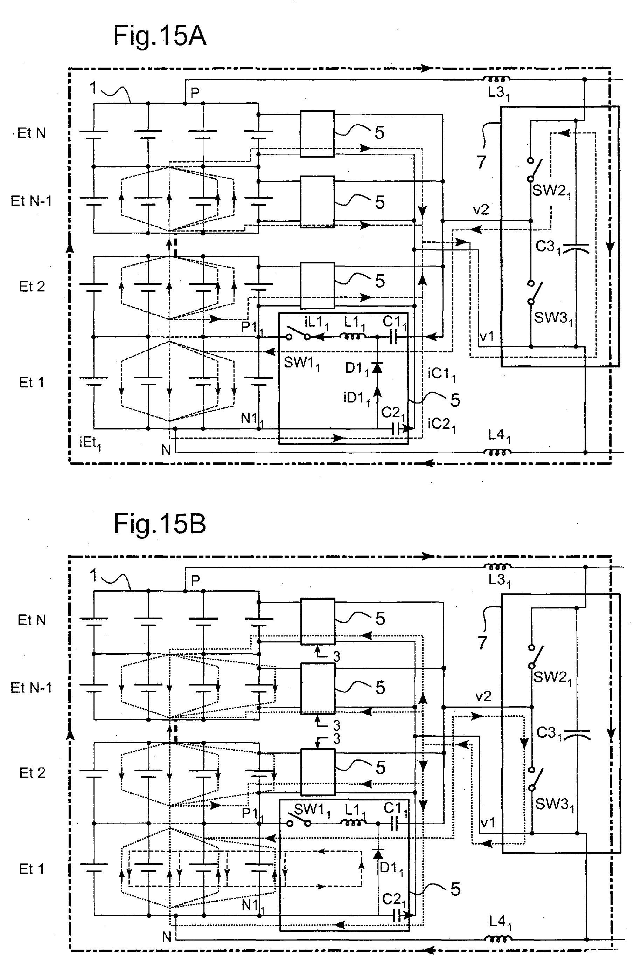

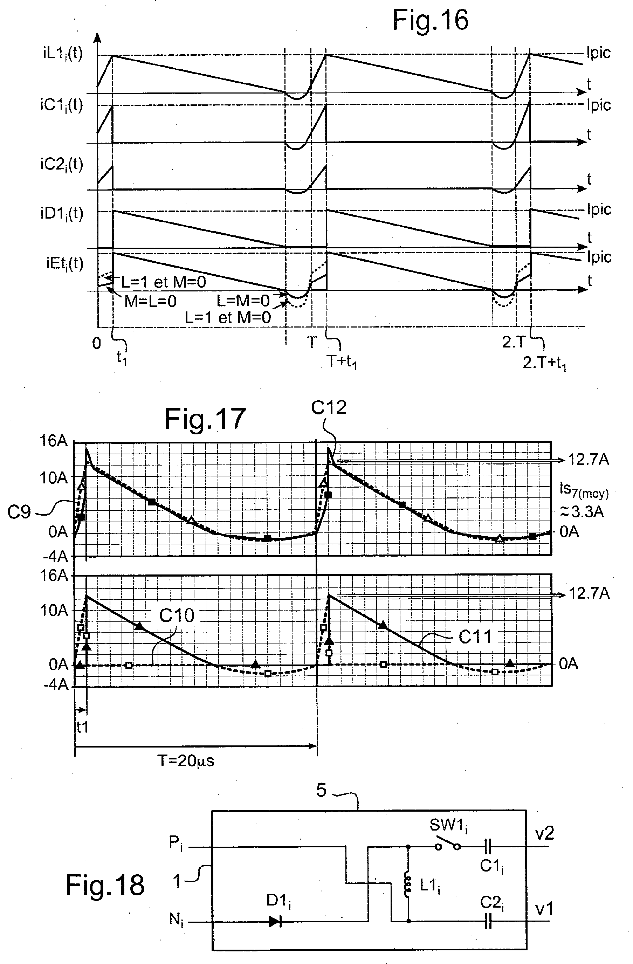

Le fonctionnement du deuxième mode de réalisation, associé au générateur de tension 7 présenté sur la figure 13 est décrit ci-dessous. Il est illustré sur les figures 15A, 15B correspondant à la charge de l'étage $Et_1$ et sur la figure 16 correspondant de façon plus générale à la charge d'un étage $Et_i$.

Le courant à travers l'étage $Et_1, Et_i$ et les inductances $L3_1, L3_i$ et $L4_1, L4_i$ est représenté de façon schématique par des flèches formés de tirets et de points, à titre d'illustration dans la mesure où un courant à travers les inductances est nécessaire pour que le courant moyen à travers le condensateur $C3_1, C3_i$ soit nul sur une période de fonctionnement en régime permanent. Ce courant est considéré continu donc constant sur une période T de fonctionnement. Sur la figure 16, ce courant est négligé pour la représentation du courant $iEt_i(t)$ dans l'étage $Et_i$.

Le fonctionnement est sensiblement identique à celui du premier mode de réalisation. Ce qui intervient en plus par rapport au premier mode de réalisation, c'est que pendant le temps t1, le courant représenté par des flèches en tirets sur la figure 15A traverse l'ensemble des étages situés au-dessus et en-dessous de l'étage $Et_i, Et_i$ sauf l'étage N. Il traverse l'ensemble des deuxièmes condensateurs $C2_j$ (avec j=1 à N) des dispositifs de charge 5. Dans le cas idéal, le courant est réparti de manière uniforme à travers l'ensemble des condensateurs. Et, au bout du temps t1 jusqu'à la fin de la période de fonctionnement T (figure 15B), le courant traverse en plus de l'étage $Et_1$, l'ensemble des deuxièmes

condensateurs C2$_j$ des dispositifs de charge 5 situés en-dessous et au-dessus de l'étage Et$_1$ en charge, l'inductance L1$_1$,L1$_i$, le condensateur C1$_1$,C1$_i$ et l'interrupteur SW3$_1$,SW3$_i$ (représentation en pointillés).

Ce deuxième mode de réalisation présente l'avantage de réduire le courant efficace à travers les étages non chargés par rapport au premier mode de réalisation. En effet, pendant le temps t1 et également à partir de l'instant où la diode D1$_1$, D1$_i$ se bloque jusqu'à la fin de la période T, le courant à travers le condensateur C1$_1$,C1$_i$ est réparti à travers l'ensemble des condensateurs C2$_j$ des dispositifs de charge 5. Plus l'étage est proche de l'étage en charge, plus le courant efficace à travers cet étage est élevé.

Par ailleurs, l'utilisation d'un interrupteur supplémentaire (non représenté) pour chaque dispositif de charge connecté par exemple en série entre la borne N$_1$,N$_i$ de l'étage Et$_1$,Et$_i$ et l'anode de la diode D1$_1$,D1$_i$ permet de minimiser le courant efficace à travers les étages non chargés. En effet, cet interrupteur empêche que le condensateur C2$_j$ du ou des dispositif(s) de charge 5 qui ne fonctionne(nt) pas conduise(nt) une partie du courant d'un ou plusieurs autre(s) dispositif(s) de charge 5 en fonctionnement. Le courant efficace à travers les étages non chargés est dans ce cas théoriquement égal à la valeur du courant continu fourni par la batterie.

**Dimensionnement**

Le dimensionnement du dispositif de charge 5 (figure 12) découle de la mise en équations de son fonctionnement tel que décrit ci-dessus. La mise en équations est effective pour le générateur de tension 7 (figure 13) associé. Pour un dimensionnement simple, la tension aux bornes du condensateur C1$_i$ et du condensateur C2$_i$, si elle existe, est considérée comme constante sur une période T de fonctionnement du dispositif de charge 5.

Les équations 1, 2 et 3 du courant dans l'inductance L1$_i$ (iL1$_i$) sont identiques pour le deuxième mode de réalisation et le premier mode de réalisation, ainsi que l'équation 4 pour définir le temps de conduction t1 à ne pas dépasser (t1$_{(max)}$) et l'équation 5 permettant de définir le courant moyen de sortie.

Le courant dans un étage chargé Et$_i$, noté iEt$_i$(t), dépend du nombre de dispositif(s) de charge en fonctionnement, du positionnement de ces derniers par rapport à l'étage Et$_i$, et de la position de l'étage Et$_i$ par rapport aux nombres d'étages. En considérant M (figure 16), le nombre de dispositif(s) de charge 5 en fonctionnement situés en-dessous de l'étage Et$_i$, et en considérant L, le nombre de dispositif(s) de charge 5 en fonctionnement situés au-dessus de l'étage Et$_i$, le courant à travers l'étage Et$_i$ pendant le temps t1 peut être approximé par l'équation 7. Le courant à travers l'étage Et$_i$ de l'instant à partir duquel la diode D1$_i$ se bloque jusqu'à la fin de la période T peut être approximé par la même équation.

$$iEt_i(t) = iC1_i(t) \times \left[ \frac{i}{N} \times (1 + L + M) - M \right] \quad \text{(équation 7)}$$

Étant donné que le courant moyen à travers le condensateur C1$_i$ est nul en régime permanent sur une période de fonctionnement, le courant moyen à travers l'étage Eti pendant le temps t1 et de l'instant à partir duquel la diode D1$_i$ se bloque jusqu'à la fin de la période T est donc nul. En prenant en compte le courant à travers les inductances L3$_i$ et L4$_i$, le courant moyen à travers l'étage chargé (IEt$_{i(moy)}$) est défini par l'équation 6.

Un condensateur C3$_i$ de découplage est utilisé pour la mise en oeuvre du générateur de tension 7 selon ce deuxième mode de réalisation. Ce condensateur C3$_i$ est défini pour fournir le courant nécessaire aux dispositifs de charge 5 sous une chute de tension à ses bornes définie. La chute de tension aux bornes du condensateur C3$_i$ en fonction du courant débité est donnée par l'équation 9, K étant le nombre de dispositif(s) de charge 5 en fonctionnement.

$$\Delta V = \frac{1}{2} \times K \times \frac{Ipic}{C1_i} \times t1 = \frac{1}{2} \times K \times \frac{Ve - Vs - Vd}{L1_i \times C1_i} \times t1^2 \quad \text{(équation 9)}$$

**Simulations**

Les condensateurs C2$_i$ sont de même valeurs que les condensateurs C1$_i$, et sont fixés à 2 $\mu$F. Le générateur de tension simulé est celui présenté sur la figure 13. Les deux inductances L3$_i$ et L4$_i$ sont fixés à 100 $\mu$H, qui est une valeur typique dans le domaine des convertisseurs en électronique de puissance.

Un condensateur C3$_i$ de découplage de 10 $\mu$F est utilisé. Ce condensateur est défini pour fournir le courant nécessaire aux dispositifs de charge 5 sous une certaine chute de tension à ses bornes. La chute de tension aux bornes du condensateur en fonction du courant débité est donnée par l'équation 9.

Le dimensionnement du dispositif de charge 5 selon le deuxième mode de réalisation est identique au dimensionnement du dispositif de charge selon le premier mode de réalisation. Pour cette raison, un seul résultat de simulation est illustré dans ce paragraphe afin de confirmer que pour des valeurs identiques de composants passifs $L1_i$ et $C1_i$, le courant moyen de sortie d'un dispositif de charge 5 selon les premier et deuxième modes de réalisation est identique. Le résultat de simulation illustre le cas extrême de fonctionnement pour lequel le dispositif doit fonctionner en mode de conduction discontinue et le courant à travers l'inductance $L1_i$ doit être nul ou positif avant chaque période de fonctionnement.

La figure 17 présente le résultat de simulation où l'on peut visualiser les courants à travers l'inductance $L1_7$ sur la courbe C9, le condensateur $C1_7$ sur la courbe C10, la diode $D1_7$ sur la courbe C11, et l'accumulateur qui présente la tension de charge la plus faible sur la courbe C12.

Le courant moyen de sortie $Is_{7(moy)}$ est égal à environ 3.3 A. Il est très proche de la valeur du courant moyen obtenu avec le premier mode de réalisation (environ 3.4 A). Les dimensionnements du premier et du deuxième mode de réalisation sont donc similaires.

Le courant moyen à travers les inductances $L4_1$ et $L3_1$ est égal à 330 mA environ. Le courant moyen à travers les étages situés au-dessus et en-dessous de l'étage $Et_i$ en charge est égal à 330 mA. Il est identique au courant moyen des étages non chargés du premier mode de réalisation.

Le courant efficace à travers l'étage 8 est égal à 610 mA. Le courant efficace à travers les étages situés au-dessus de l'étage $Et_i$ en charge est d'autant plus faible que l'étage est éloigné de l'étage $Et_i$. Le courant efficace à travers l'étage 10 est égal au courant continu qui traverse les inductances $L3_1$ et $L4_1$, soit 330 mA. Le courant efficace à travers l'étage 6 est de l'ordre de 915 mA. Le courant efficace à travers les étages situés en-dessous de l'étage $Et_i$ en charge est d'autant plus faible que l'étage est éloigné de l'étage $Et_i$. Le courant efficace à travers l'étage 1 est de l'ordre de 360 mA. Le courant efficace à travers les étages est diminué d'un facteur d'au moins 1,8 fois dans le pire cas par rapport au premier mode de réalisation.

## TROISIÈME MODE DE RÉALISATION

On décrit maintenant un troisième mode de réalisation pour le système d'équilibrage 2.

### Dispositif de charge

La figure 18 représente un troisième mode de réalisation pour un dispositif de charge 5. Ce troisième mode de réalisation diffère du deuxième mode de réalisation par le fait que : la deuxième extrémité du deuxième condensateur $C2_i$ est connectée à la deuxième extrémité de l'inductance $L1_i$; et au pôle $P_i$ de l'étage, la cathode de la diode $D1_i$ est connectée à la première extrémité de l'inductance $L1_i$, et l'interrupteur $SW1_i$ est connecté à la deuxième extrémité du condensateur $C1_i$ et à la première extrémité de l'inductance $L1_i$.

Selon une variante de réalisation, on peut ajouter un condensateur (non représenté) configuré pour filtrer l'ondulation de courant issue du dispositif de charge 5 mais au lieu d'être connecté entre la borne $N_i$ et la première extrémité de l'interrupteur $SW1_i$ comme dans les premier et deuxième modes de réalisation, ce condensateur est connecté entre la borne $P_i$ et l'anode de la diode $D1_i$ pour le troisième mode de réalisation.

Pour le troisième mode de réalisation, l'interrupteur peut être aussi connecté à la sortie v2 du générateur de tension 7 et à la première extrémité du condensateur $C1_i$.

### Générateur de tension

Tout comme le premier et le deuxième mode de réalisation, le troisième mode de réalisation est adapté à un générateur de tension fournissant par exemple un créneau de tension positive uniquement. Pour ce troisième mode de réalisation le générateur de tension peut être l'un ou l'autre des générateurs de tension présentés sur les figures 13 et 14 décrits dans le deuxième mode de réalisation.

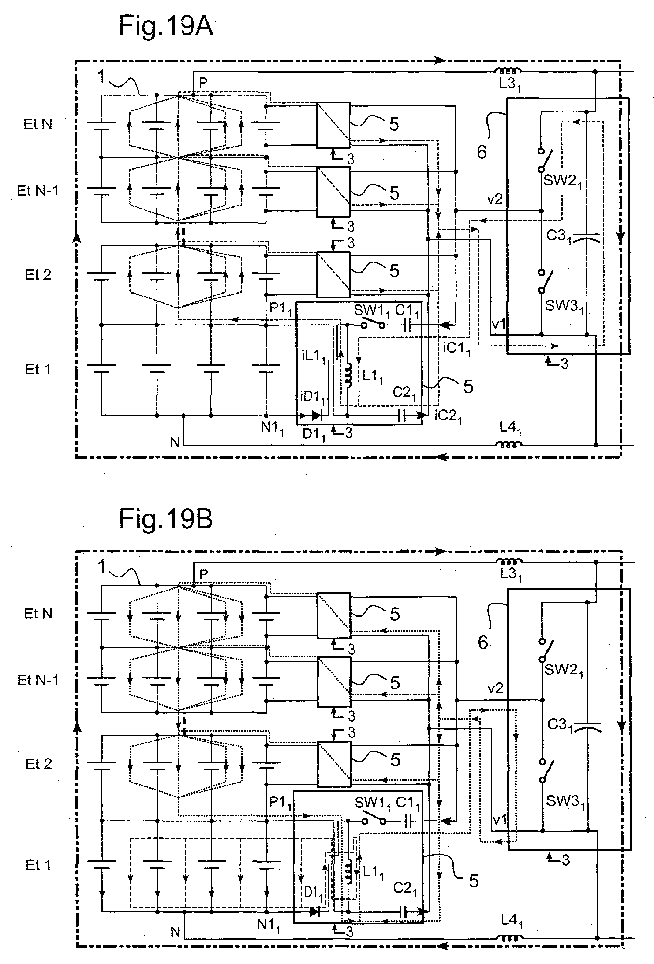

### Fonctionnement (figures 16,19A,19B)

Le fonctionnement du troisième mode de réalisation, associé au générateur de tension présenté sur la figure 13, est décrit ci-dessous. Il est illustré sur les figures 19A,19B correspondant à la charge de l'étage $Et_1$ et sur la figure 16 correspondant plus généralement à la charge d'un étage $Et_i$. Il est similaire au fonctionnement selon le deuxième mode de réalisation à l'unique différence près que, pendant le temps t1, le courant à travers l'inductance $L1_i$ traverse l'ensemble des étages situés au-dessus et en-dessous de l'étage Et; sauf l'étage 1 et non l'étage N, comme c'est le cas pour le deuxième mode de réalisation. L'évolution des courants dans l'inductance $L1_i$, les deux condensateurs $C1_i$ et $C2_i$ ainsi que dans la diode $D1_i$ et l'étage $Et_i$ en parallèle est identique au deuxième mode de réalisation (figure 16).

En ce qui concerne le cas particulier de la charge de l'étage $Et_1$, l'évolution du courant dans cet étage $Et_1$ varie

du cas général par le fait que le courant s'annule jusqu'à t1 et également lorsque les diodes se bloquent.

**Dimensionnement**

Comme précédemment, le dimensionnement du dispositif de charge 5 (figure 18) découle de la mise en équations de son fonctionnement et est effective pour le générateur de tension 7 associé.

Les équations 1 à 5 sont identiques aux premier et deuxième modes de réalisation.

Le courant dans un étage chargé, noté $iEt_i(t)$, dépend du nombre de dispositif(s) de charge en fonctionnement, du positionnement de ces derniers par rapport à l'étage $Et_i$, et de la position de l'étage $Et_i$ par rapport aux nombres d'étages. En considérant M, le nombre de dispositif(s) de charge en fonctionnement situés en-dessous de l'étage $Et_i$, et en considérant L, le nombre de dispositif(s) de charge en fonctionnement situés au-dessus de l'étage $Et_i$, le courant à travers l'étage $Et_i$ pendant le temps t1 peut être approximé avec l'équation 10. Le courant à travers l'étage $Et_i$ de l'instant à partir duquel la diode $D1_i$ se bloque jusqu'à la fin de la période T peut être approximé par la même équation.

$$iEt_i(t) = \frac{iC1_i(t)}{N} \times \left[ (i-1) \times (L+1) - (N-i+1) \times M \right] \qquad \text{(équation 10)}$$

Étant donné que le courant moyen à travers le condensateur $C1_i$ est nul en régime permanent sur une période de fonctionnement, le courant moyen à travers l'étage Eti pendant le temps t1 et de l'instant à partir duquel la diode $D1_i$ se bloque jusqu'à la fin de la période T est donc nul. En considérant le courant à travers les inductances $L3_i$ et $L4_i$, le courant moyen à travers l'étage chargé ($IEt_{i(moy)}$) est défini par l'équation 6.

**Simulations**

Les conditions de simulations sont identiques au deuxième mode de réalisation. Le dimensionnement du dispositif de charge 5 selon le troisième mode de réalisation est identique au dimensionnement du dispositif de charge 5 selon les premier et deuxième modes de réalisation. Pour cette raison, un seul résultat de simulation est illustré dans ce paragraphe afin de confirmer que pour des valeurs identiques de composants passifs $L1_i$ et $C1_i$, le courant moyen de sortie d'un dispositif de charge selon ces trois modes de réalisation est identique. Le résultat de simulation illustre le cas extrême de fonctionnement pour lequel le dispositif doit fonctionner en mode de conduction discontinue et le courant à travers l'inductance $L1_i$ doit être nul ou positif avant chaque période de fonctionnement T.

La figure 20 présente le résultat de simulation où l'on peut visualiser les courants à travers l'inductance $L1_7$ sur la courbe C13, le condensateur $C1_7$ sur la courbe C14, la diode $D1_7$ sur la courbe C15, et l'accumulateur qui présente la tension de charge la plus faible sur la courbe C16.

Le courant moyen de sortie $Is_{7(moy)}$ est égal à environ 3.3 A. Il est très proche de la valeur du courant moyen obtenu pour les premier et deuxième modes de réalisation (environ 3.4 A - 3.3 A). Les dimensionnements des trois premiers modes de réalisation sont donc similaires.

Le courant moyen à travers les inductances $L4_1$ et $L3_1$ est égal à 330 mA environ. Le courant moyen à travers les étages situés au-dessus et en-dessous de l'étage $Et_i$ en charge est égal à 330 mA. Il est identique au courant moyen des étages non chargés des premier et deuxième modes de réalisation.

Le courant efficace à travers l'étage 8 est égal à 670 mA. Le courant efficace à travers les étages situés au-dessus de l'étage $Et_i$ en charge est d'autant plus faible que l'étage est éloigné de l'étage $Et_i$. Le courant efficace à travers l'étage 10 est égal à 380 mA. Le courant efficace à travers l'étage 6 est de l'ordre de 890 mA. Le courant efficace à travers les étages situés en-dessous de l'étage $Et_i$ en charge est d'autant plus faible que l'étage est éloigné de l'étage $Et_i$. Le courant efficace à travers l'étage 1 est égal au courant continu qui traverse les inductances $L3_1$ et $L4_1$, soit 330 mA. Le courant efficace à travers les étages non chargés est diminué d'un facteur d'au moins 1,9 fois dans le pire cas par rapport au premier mode de réalisation. Le courant efficace à travers les étages non chargés est quasiment identique pour les troisième et deuxième modes de réalisation.

**QUATRIÈME MODE DE RÉALISATION**

On décrit maintenant un quatrième mode de réalisation pour le système d'équilibrage 2.

**Dispositif de charge**

La figure 21 représente un quatrième mode de réalisation du dispositif de charge 5. Ce quatrième mode de réalisation diffère du deuxième mode de réalisation par le fait que le dispositif de charge 5 comporte en outre une deuxième inductance $L2_i$ et une deuxième diode $D2_i$, et par le fait que : la deuxième extrémité du deuxième condensateur $C2_i$ est connectée à la première extrémité de la deuxième inductance $L2_i$, l'anode et la cathode de la deuxième diode $D2_i$ sont respectivement connectées au pôle N; de l'étage et à la première extrémité de la deuxième inductance $L2_i$, l'interrupteur $SW1_i$ est connecté aux deuxièmes extrémités des deux inductances $L1_i$ et $L2_i$.

Le quatrième mode de réalisation se différencie également par le fait qu'il est adapté pour être utilisé avec un générateur de tension fournissant par exemple un créneau de tensions positive et également négative.

Des variantes de position de l'interrupteur $SW1_i$ pour le quatrième mode de réalisation du dispositif de charge sont illustrées sur les figures 22A et 22B. Sur la figure 22A, l'interrupteur $SW1_i$ est connecté par sa première extrémité au pôle positif v2 du générateur de tension 7 et par sa deuxième extrémité à la première extrémité du premier condensateur $C1_i$. Sur la figure 22B, la première extrémité de l'interrupteur $SW1_i$ est connectée à la deuxième extrémité du premier condensateur $C1_i$ et sa deuxième extrémité est connectée à la première extrémité de la première inductance $L1_i$.

De plus comme on le constate sur ces figures, un interrupteur supplémentaire $SW11_i$ doit être de plus connecté soit à la sortie v1 du générateur de tension 7 et à la première extrémité du condensateur $C2_i$ (figure 22A), soit à la deuxième extrémité du condensateur $C2_i$ et à la cathode de la deuxième diode $D2_i$ (figure 22B).

## Générateur de tension

Pour un tel dispositif de charge 5, un premier exemple de réalisation du générateur de tension consiste à utiliser un pont complet à quatre interrupteurs $SW2_i$ à $SW5_i$ et un transformateur $T1_i$ (figure 23) avec sa variante illustrée par la figure 23'. Selon cette variante, si un générateur de tension 7 est connecté aux bornes de la batterie 1, le générateur de tension 7 peut utiliser un transformateur $T1_i$ constitué d'un enroulement primaire et de plusieurs enroulements secondaires. Dans cet exemple, on a illustré aux bornes de l'enroulement primaire du transformateur $T1_i$, un pont complet à quatre interrupteurs $SW2_i$ à $SW5_i$. L'utilisation de plusieurs enroulements secondaires permet de diminuer la tenue en tension des condensateurs des dispositifs de charge 5. Un enroulement secondaire pour une mise en série de dix à douze étages est une suggestion.

Un deuxième exemple de réalisation du générateur de tension 7 consiste à utiliser un demi-pont à deux interrupteurs SW2i et $SW3_i$, et un transformateur $T1_i$ dont le primaire est connecté entre les points milieux des deux interrupteurs $SW2_i$ et $SW3_i$ et de deux condensateurs $C4_i$ et $C5_i$ (figure 24A). Le deuxième exemple de réalisation présente l'avantage d'avoir un nombre d'interrupteurs réduit par rapport au premier exemple, et également d'éviter tout risque de saturation du transformateur due à un déséquilibre de la séquence de commande des interrupteurs grâce aux condensateurs $C4_i$ et $C5_i$ en série avec l'enroulement primaire du transformateur $T1_i$.

Un troisième exemple de réalisation du générateur de tension consiste à utiliser un transformateur $T1_i$ à point milieu au primaire et deux interrupteurs $SW2_i$ et $SW3_i$ (figure 24B). Le troisième exemple de réalisation présente l'avantage d'une référence commune pour la commande des deux interrupteurs $SW2_i$ et $SW3_i$.

Quel que soit le générateur de tension 7 utilisé, le temps de conduction des interrupteurs $SW2_i$ et $SW3_i$ est défini pour que chaque dispositif de charge 5 fonctionne en régime de conduction discontinue.

Les trois exemples de réalisation génèrent en sortie un créneau de tensions positive et négative.

## Fonctionnement (figures 25A, 25B et 26)

Le fonctionnement du quatrième mode de réalisation, associé au générateur de tension 7 présenté sur la figure 24A, est décrit ci-dessous. Sur les figures 25A, 25B, l'illustration du fonctionnement est faite uniquement pour un créneau de tension positive. Le courant, représenté schématiquement par des flèches formées de tirets et de points, à travers la batterie est à titre d'illustration, dans la mesure où un courant à travers la batterie est nécessaire pour que les courants moyens à travers les condensateurs $C3_1$, $C4_1$ et $C5_1$ soient nuls sur une période de fonctionnement en régime permanent. Ce courant est considéré continu donc constant sur une période de fonctionnement.

On décrit maintenant les différences de fonctionnement par rapport au deuxième mode de réalisation avec l'étagé $Et_1$ en charge.

Pendant le temps t1, le courant à travers l'inductance $L1_1$ croît proportionnellement à la tension appliquée à ses bornes, égale approximativement à la tension du secondaire du transformateur $T1_1$ moins la tension de l'étage $Et_1$ en charge. Le courant traverse uniquement l'étage $Et_1$. Le courant à travers les condensateurs $C1_1$ et $C2_1$ du dispositif de charge 5 en fonctionnement est égal au courant à travers l'inductance $L1_1$. Pendant cette phase, la deuxième diode $D2_1$ du dispositif de charge 5 conduit. La diode $D1_1$ est bloquée avec à ses bornes une tension égale à moins la tension de la batterie. La deuxième inductance $L2_1$ emmagasine de l'énergie. La tension aux bornes de la deuxième inductance $L2_1$ est égale à moins la tension de l'étage $Et_1$ en charge moins la chute de tension à l'état passant de la diode $D2_1$.

Au bout du temps t1, l'interrupteur $SW2_1$ s'ouvre. Le courant dans l'inductance $L1_1$ atteint à cet instant une valeur pic, égale approximativement à la tension appliquée aux bornes de l'inductance lorsque le générateur de tension fournit de l'énergie, multipliée par t1 et divisée par la valeur de l'inductance.

Au bout du temps t1 et jusqu'à la moitié de la période de fonctionnement T/2,le générateur de tension n'impose pas de tension aux bornes v2 et v1 du dispositif de charge de l'étage $Et_1$. Les interrupteurs $SW3_1$ et $SW2_1$ sont ouverts (figures 25B et 26). Le courant à travers l'inductance $L1_1$ décroît proportionnellement à la tension appliquée à ses bornes, égale à moins la tension de l'étage $Et_1$ d'accumulateurs moins la chute de tension à l'état passant de la diode $D1_1$. La diode $D1_1$ est passante jusqu'à ce que le courant dans l'étage $Et_1$ en charge s'annule. La diode $D1_1$ conduit le courant à travers l'inductance $L1_1$ et également le courant à travers l'inductance $L2_1$. Le courant à travers l'inductance $L2_1$ est considéré constant durant cette phase dans le mesure où l'impédance du secondaire du transformateur est considérée nettement supérieure à l'impédance des inductances $L1_1$ et $L2_1$. Le courant à travers l'inductance $L2_1$ est égal au courant de magnétisation du transformateur. Il est noté Im sur la figure 25. Lorsque la diode $D1_1$ se bloque, le courant à travers l'inductance $L2_1$ ne traverse plus l'étage mais est égal à l'opposé du courant à travers l'inductance $L1_1$. Pendant cette phase, la diode $D2_1$ est bloquée avec à ses bornes une tension égale à moins la tension de l'étage $Et_1$.

Au bout de la demi période T/2 et jusqu'à la fin du temps T/2 plus le temps t1, une tension négative est appliquée entre les bornes v2 et v1 du générateur de tension. L'interrupteur $SW3_1$ est fermé et l'interrupteur $SW2_1$ est ouvert. De l'énergie est emmagasinée dans l'inductance $L2_1$. Le courant à travers l'inductance $L2_1$ croît proportionnellement à la tension appliquée à ses bornes, égale approximativement à la tension du secondaire du transformateur $T1_1$ moins la tension de l'étage en charge. Le courant traverse uniquement l'étage $Et_1$ en charge. Le courant à travers les condensateurs $C1_1$ et $C2_1$ du dispositif de charge en fonctionnement est égal au courant à travers l'inductance $L2_1$. Pendant cette phase, la diode $D1_1$ conduit. La diode $D2_1$ est bloquée avec à ses bornes une tension égale à moins la tension de la batterie. L'inductance $L1_1$ emmagasine de l'énergie. La tension aux bornes de l'inductance $L1_1$ est égale à moins la tension de l'étage $Et_1$ en charge moins la chute de tension à l'état passant de la diode $D1_1$.

Au bout du temps T/2 plus t1, l'interrupteur $SW3_1$ s'ouvre. Le courant dans l'inductance atteint à cet instant une valeur pic, égale approximativement à la tension appliquée aux bornes de l'inductance lorsque le générateur de tension fournit de l'énergie, multipliée par t1 et divisée par la valeur de l'inductance.

Au bout du temps T/2 plus t1 jusqu'à la fin de la période T, le générateur de tension 7 n'impose pas de tension aux bornes v2 et v1 du dispositif de charge 5 de l'étage $Et_1$. Les interrupteurs $SW3_1$ et $SW2_1$ sont ouverts. Le courant à travers l'inductance $L2_1$ décroît proportionnellement à la tension appliquée à ses bornes, égale à moins la tension de l'étage $Et_1$ d'accumulateurs moins la chute de tension à l'état passant de la diode $D2_1$. La diode $D2_1$ est passante jusqu'à ce que le courant dans l'étage $Et_1$ en charge s'annule. La diode $D2_1$ conduit le courant à travers l'inductance $L2_1$ et également le courant à travers l'inductance $L1_1$. Le courant à travers l'inductance $L1_1$ est égal au courant de magnétisation (Im) du transformateur. Lorsque la diode $D2_1$ se bloque, le courant à travers l'inductance $L1_1$ ne traverse plus l'étage mais est égal à l'opposé du courant à travers l'inductance $L2_1$. Pendant cette phase, la diode $D1_1$ est bloquée avec à ses bornes une tension égale à moins la tension de l'étage $Et_1$.

Ce quatrième mode de réalisation présente l'avantage d'imposer un courant efficace minimal aux étages qui ne sont pas chargés grâce au fait que le courant instantané à travers les condensateurs $C1_1$ et $C2_1$ est identique. Le courant efficace est donc égal au courant fournit par la batterie 1 en considérant que ce courant est un courant continu.

**Dimensionnement**

Comme précédemment, le dimensionnement du dispositif de charge 5 (figure 21) découle de la mise en équations de son fonctionnement et est effective pour le générateur de tension 7 associé.

Pendant le temps t1, le courant croît dans l'inductance $L1_i$ ($iL1_i$). Le courant est considéré nul à chaque période de fonctionnement. La tension au secondaire du transformateur est notée $VsT1_i$. La somme instantanée des tensions aux bornes des condensateurs $C1_i$ et $C2_i$ est considérée comme nulle. En négligeant la chute de tension à l'état passant des interrupteurs $SW2_i$ et $SW1_i$ et en considérant la chute de tension Vd à l'état passant de la diode, le courant $iL1_i(t)$ s'écrit :

$$iL1_i(t) = \frac{VsT1_i - Vs - Vd}{L1_i} \times t \qquad \text{(équation 11)}$$

Au bout du temps t1, l'interrupteur $SW2_i$ s'ouvre. Le courant dans l'inductance $L1_i$ ; atteint la valeur pic de :

$$iL1_i(t1) = Ipic = \frac{VsT1_i - Vs - Vd}{L1_i} \times t1 \qquad \text{(équation 12)}$$

Au bout du temps t1 jusqu'à l'annulation du courant dans L1$_i$; la diode D1$_i$ conduit. Le courant dans l'inductance L1$_i$ décroît suivant la loi suivante.

$$iL1_i(t) = -\frac{Vs+Vd}{L1_i} \times t + Ipic \quad \text{(équation 13)}$$

Le courant à travers l'inductance L2$_i$ suit entre T/2 et T les mêmes équations que le courant à travers l'inductance L1$_i$ entre l'instant 0 et la moitié de la période de fonctionnement T/2.

A partir de l'équation 13, le temps de conduction t1 à ne pas dépasser (t1$_{(max)}$) pour que le dispositif fonctionne en conduction discontinue peut être défini. Le courant à travers les inductances L1$_i$ et L2$_i$ s'annule avant chaque demi-période de fonctionnement du dispositif. Pour limiter l'ondulation du courant de sortie, il est possible d'annuler le courant à travers les inductances à proximité de chaque période de fonctionnement. Dans notre cas, cf. figure 26, le temps t1$_{(max)}$ est déterminé en considérant que le courant dans l'inductance L1$_i$ et L2$_i$ s'annule en T/2. Pour considérer le pire cas, le temps t1$_{(max)}$ est à évaluer pour la tension d'entrée VsT1$_i$ maximale et la tension de sortie Vs minimale. De plus, les chutes de tension des diodes peuvent être négligées pour considérer le pire cas.

$$t1_{(max)} = \frac{T}{2} \times \frac{1}{\dfrac{VsT1_i - Vs - Vd}{Vs+Vd} + 1} \quad \text{(équation 14)}$$

Le courant de sortie du dispositif de charge is$_i$(t) est égal à la somme des courants à travers les inductances L1$_i$ et L2$_i$. Le courant moyen de sortie (Is$_{i(moy)}$) est calculé à partir de l'équation 15 en négligeant Im ainsi que les courant iL$_1$ et iL$_2$ pendant les durées quand les diodes respectivement D1$_i$ et D2$_i$ conduisent. On suppose de plus que les inductances L1$_i$ et L2$_i$ sont identiques.

$$Is_{i(moy)} = \frac{Ipic}{T} \times \left[ t_1 + \frac{Ipic \times L1_i}{(Vs+Vd)} \right] = \frac{t1^2}{T \times L1_i} \times \frac{VsT1_i \times (VsT1_i - Vs - Vd)}{Vs+Vd}$$

(équation 15)

Le courant dans un étage chargé i, noté iEt$_i$(t), dépend uniquement du nombre de dispositif(s) de charge en fonctionnement pour ce mode de réalisation. En considérant K, le nombre de dispositif(s) de charge en fonctionnement et m, le rapport de transformation du transformateur T1$_i$ (m = v2/v1), la valeur moyenne du courant à travers l'étage chargé (IEt$_{i(moy)}$) est obtenue à l'aide de l'équation 16. Les courants à travers l'inductance L1$_i$ et L2$_i$ lorsque respectivement les diodes D1$_i$ et D2$_i$ conduisent n'est pas considéré.

$$IEt_{i(moy)} = \frac{1}{T} \times Ipic \times \left[ t_1 \times \left( 1 - \frac{K \times m}{2} \right) + \frac{Ipic \times L1_i}{(Vs+Vd)} \right] \quad \text{(équation 16)}$$

**Exemple**

Pour le quatrième mode de réalisation du dispositif de charge 5 associé au générateur de tension 7 de la figure 21, le rapport de transformation m du transformateur T1$_i$ est fixé à 2 afin de conserver au secondaire du transformateur T1$_i$ une tension égale à la tension de la batterie.

Les hypothèses sont les mêmes que celles du premier mode de réalisation mais où la fréquence est de 25kHz.

Le temps t1$_{(max)}$ est calculé en utilisant la chute de tension minimale des diodes et les tensions maximale d'entrée et minimale de sortie du dispositif de charge. Les inductances maximales L1$_{i(max)}$ et L2$_{i(max)}$ sont calculées quant à elles en utilisant la chute de tension maximale des diodes et les tensions minimale d'entrée et maximale de sortie du dispositif de charge. Le temps t1$_{(max)}$ est utilisé pour le calcul de l'inductance L1$_i$ afin de minimiser le courant pic et le courant efficace à travers l'inductance, les interrupteurs et les diodes. Par souci de robustesse, on peut utiliser des valeurs plus faibles.

$$tl_{(max)} = \frac{T}{2} \times \cfrac{1}{\cfrac{VsT1_i - Vs - Vd}{Vs + Vd} + 1}$$ (équation 14)

$$= \cfrac{1}{2 \times 25 \times 10^3} \times \cfrac{1}{\cfrac{3.6 \times 9 - 0.3}{2.5 + 0.3} + 1}$$

$$tl_{(max)} = 1.60\,\mu s$$

$$Ll_{i(max)} = L2_{i(max)} = \frac{tl^2}{T \times Is_{i(moy)}} \times \frac{VsT1_i \times (VsT1_i - Vs - Vd)}{Vs + Vd}$$ (équation 15)

$$= 25 \times 10^3 \times (1.60 \times 10^{-6})^2 \times \frac{(2.5 \times 9 + 3.6) \times (2.5 \times 9 - 0.7)}{3.6 + 0.7}$$

$$Ll_{i(max)} = L2_{i(max)} = 8.5\,\mu H$$

## Simulations

La valeur des inductances $L1_i$ et $L2_i$ est fixée à 8.5 $\mu$H. Les condensateurs d'isolation $C1_i$ et $C2_i$ sont fixés à 2 $\mu$F. Dans ce quatrième mode de réalisation, l'hypothèse de fréquence de fonctionnement typique (F) est 25 kHz, soit T = 1/F = 40 $\mu$s.

Le générateur de tension 7 simulé est celui représenté sur la figure 24A. Il fournit un créneau de tension positive tant que l'interrupteur $SW2_i$ est fermé et que l'interrupteur $SW3_i$ est ouvert. Il fournit un créneau de tension négative tant que l'interrupteur $SW3_i$ est fermé et que l'interrupteur $SW2_i$ est ouvert.

Lorsque les interrupteurs $SW2_i$ et $SW3_i$ sont à l'état ouverts, la tension aux bornes du primaire du transformateur $T1_i$ n'est pas fixée. Le temps de conduction des interrupteurs $SW2_i$ et $SW3_i$ est fixé à 1.6 $\mu$s. Une diode est implémentée en parallèle de chaque interrupteur afin de permettre la démagnétisation du transformateur au primaire également. Les condensateurs $C3_i$, $C4_i$ et $C5_i$ sont fixés à 10 $\mu$F dans notre exemple. Comme pour le troisième mode de réalisation, ces condensateurs sont définis pour fournir le courant nécessaire au primaire du transformateur $T1_i$ sous une certaine chute de tension à ses bornes. La chute de tension aux bornes du condensateur en fonction du courant débité est donnée par l'équation 9.

Une inductance L5 implémentée en série avec la batterie et en entrée du générateur de tension est utilisée pour filtrer l'ondulation de courant issue de la batterie.

## Première simulation (figure 27) :

Le premier résultat illustre le cas extrême de fonctionnement pour lequel le courant moyen de sortie doit être au minimum de 1 A. La figure 27 présente le résultat de simulation où l'on peut visualiser les courants à travers les inductances $L1_7$ et $L2_7$ respectivement sur les courbes C17 et C 18, le condensateur $C1_7$ sur la courbe C19, la diode $D1_7$ sur la courbe C20, la sortie du dispositif de charge sur la courbe C21 et l'accumulateur ayant la tension de charge la plus élevée sur la courbe C22.

Le fonctionnement observé est similaire au fonctionnement décrit au paragraphe précédent sur le quatrième mode de réalisation. Le courant moyen de sortie $Is_{7(moy)}$ est égal à environ 1.1 A. Un courant moyen minimum de 1 A est respecté quelles que soient la valeur de tension de l'accumulateur chargé et la valeur de tension de la batterie d'accumulateurs.

Le montage fonctionne en mode de conduction discontinue avec un courant à travers les inductances $L1_i$ et $L2_i$ qui s'annulent avant chaque demi-période de fonctionnement du dispositif, comme désiré.

**Deuxième simulation (figure 28) :**

Le deuxième résultat illustre le cas extrême de fonctionnement pour lequel le dispositif doit fonctionner en mode de conduction discontinue, c'est-à-dire que le courant à travers les inductances $L1_i$ et $L2_i$ doit s'annuler avant chaque demi-période de fonctionnement $T/2$ du dispositif.

La figure 28 présente le résultat de simulation où l'on peut visualiser les courants à travers les inductances $L1_7$ et $L2_7$ respectivement sur les courbes C23 et C24, le condensateur $C1_7$ sur la courbe C25, la diode $D1_7$ sur la courbe C26, la sortie du dispositif de charge sur la courbe C27 et l'accumulateur ayant la tension de charge la plus faible sur la courbe C28. Le montage fonctionne en mode de conduction discontinue et le courant à travers les inductances $L1_i$ et $L2_i$ s'annule comme désiré avant chaque demi-période de fonctionnement du dispositif. Le fonctionnement en conduction discontinue est respecté quelles que soient la valeur de tension de l'accumulateur chargé et la valeur de tension de la batterie d'accumulateurs. Le courant moyen de sortie $Is_{7(moy)}$ est égal à environ 2.8 A. Il est supérieur à la valeur minimum de 1 A. Le courant continu à travers la batterie est égal à 260 mA environ. Le courant efficace à travers les étages non chargés est égal au courant continu fournit par la batterie.

Ainsi, quel que soit le mode de réalisation utilisé, on obtient un équilibrage efficace de la charge de la batterie 1 d'accumulateurs.

**Revendications**

**1.** Système d'équilibrage pour batterie comprenant au moins deux étages d'accumulateurs (Et;) mis en série, chaque étage d'accumulateurs (Et;) comprenant au moins un accumulateur ($A_{ij}$) placé entre des pôles négatif ($N_i$) et positif ($P_i$) de l'étage d'accumulateurs, **caractérisé en ce que** ledit système comporte :

- au moins un générateur de tension (7) comprenant une borne positive (v2) et une borne négative (v1),
- pour chaque étage d'accumulateurs (Et;) un dispositif de charge (5) associé alimenté par le générateur de tension (7) et comprenant :

• une inductance ($L1_i$; $L2_i$),
• un premier condensateur ($C1_i$) dont une première extrémité est connectée à une borne (v2, v1) du générateur de tension (7),une diode ($D1_i$, $D2_i$) connectée par son anode au pôle négatif dudit étage d'accumulateurs associé et connectée à une extrémité de l'inductance associée ($L1_i$, $L2_i$), de façon à permettre lorsque la diode ($D1_i$, $D2_i$) est passante une circulation d'un courant de charge à travers l'étage d'accumulateurs associé, la diode ($D1_i$, $D2_i$) et l'inductance ($L1_i$, $L2_i$) associées, et
• un interrupteur ($SW1_i$) dont une extrémité est reliée à une extrémité de l'inductance ($L1_i$, $L2_i$), de sorte que l'interrupteur ($SW1_i$), l'inductance ($L1_i$, $L2_i$) et le premier condensateur ($C1_i$) d'un dispositif de charge (5) sont connectés en série entre une borne (v2, v1) du générateur de tension (7) et un pôle de l'étage d'accumulateurs associé, et

- un dispositif de commande (3) configuré :

• pour, pendant un temps de conduction, appliquer une variation de tension entre les bornes (v2, v1) du générateur de tension (7) et pour fermer l'interrupteur ($SW1_i$) d'un dispositif de charge (5) associé à un étage d'accumulateurs à charger, de sorte que l'inductance ($L1_i$, $L2_i$) et l'interrupteur ($SW1_i$) du dispositif de charge (5) sont traversés par un courant d'alimentation croissant provenant du générateur de tension (7) et que l'inductance ($L1_i$, $L2_i$) emmagasine de l'énergie ; et
• pour, au bout du temps de conduction, interrompre ledit courant d'alimentation à travers l'inductance ($L1_i$, $L2_i$) et permettre le transfert de l'énergie emmagasinée dans l'inductance ($L1_i$, $L2_i$) audit étage d'accumulateurs associé par circulation d'un courant de charge décroissant à travers l'inductance ($L1_i$, $L2_i$) et la diode ($D1_i$, $D2_i$) associées.

**2.** Système d'équilibrage pour batterie selon la revendication 1, **caractérisé en ce qu'**il comporte un générateur de tension (7) connecté à un nombre prédéfini de dispositifs de charge (5).

**3.** Système d'équilibrage pour batterie selon l'une des revendications 1 ou 2, **caractérisé en ce que** le premier condensateur ($C1_i$) présente une première extrémité connectée à la borne positive (v2) du générateur de tension (7).

**4.** Système d'équilibrage pour batterie selon l'une des revendications 1 à 3, **caractérisé en ce que** la diode ($D1_i$) est

connectée par son anode au pôle négatif de l'étage d'accumulateurs associé et par sa cathode à une première extrémité de l'inductance ($L1_i$).

5. Système d'équilibrage pour batterie selon l'une quelconque des revendications précédentes, **caractérisé en ce que** le dispositif de commande (3) est configuré pour interrompre le courant d'alimentation à travers l'inductance ($L1_i$, $L2_i$) en imposant une tension nulle aux bornes du générateur de tension (7)

6. Système d'équilibrage pour batterie selon la revendication 3, **caractérisé en ce que** :

   - une deuxième extrémité du premier condensateur ($C1_i$) est connectée à une première extrémité de l'inductance ($L1_i$),
   - la cathode de la diode ($D1_i$) est connectée à la deuxième extrémité du premier condensateur ($C1_i$), et
   - l'interrupteur ($SW1_i$) du dispositif de charge (5) est connecté par une première extrémité à une deuxième extrémité de l'inductance ($L1_i$) et par une deuxième extrémité au pôle positif ($P_i$) de l'étage d'accumulateurs associé.

7. Système d'équilibrage pour batterie selon la revendication 3, **caractérisé en ce que** :

   - le dispositif de charge comporte :

     • un premier condensateur ($C1_i$) dont la première extrémité est connectée à la borne positive (v2) du générateur de tension (7) et dont la deuxième extrémité est connectée à la première extrémité de l'inductance ($L1_i$),
     • un deuxième condensateur ($C2_i$) dont la première extrémité est connectée à la borne négative (v 1) du générateur de tension (7) et dont la deuxième extrémité est connectée au pôle négatif ($N_i$) de l'étage d'accumulateurs associé ou à la deuxième extrémité de l'inductance ($L1_i$) et au pôle positif ($P_i$) de l'étage d'accumulateurs associé, et **en ce que**

   - la diode ($D1_i$) est connectée par son anode et sa cathode respectivement au pôle négatif ($N_i$) de l'étage d'accumulateurs associé et à la première extrémité de l'inductance ($L1_i$), et
   - l'interrupteur ($SW1_i$) du dispositif de charge (5) est connecté par une extrémité à l'inductance ($L1_i$) et par une autre extrémité au pôle positif ($P_i$) de l'étage d'accumulateurs associé ou au premier condensateur ($C1_i$).

8. Système d'équilibrage pour batterie selon l'une quelconque des revendications précédentes, **caractérisé en ce que** le dispositif de commande (3) est configuré pour contrôler la vitesse de fermeture de l'interrupteur ($SW1_i$) d'un dispositif de charge (5) associé à un étage d'accumulateurs ($Et_i$) à charger, lorsqu'une tension est au préalable appliquée aux pôles (v1,v2) du générateur de tension (7) alimentant le dispositif de charge (5).

9. Système d'équilibrage pour batterie selon l'une quelconque des revendications précédentes, **caractérisé en ce que** le générateur de tension (7) comporte au moins un interrupteur commandé ($SW2_i$,$SW3_i$,$SW4_i$,$SW5_i$) par le dispositif de commande (3) et **en ce que** ledit au moins un générateur de tension (7) comporte un condensateur de découplage ($C3_i$).

10. Système d'équilibrage pour batterie selon les revendications 7 et 9, **caractérisé en ce que** le générateur de tension (7) comporte deux interrupteurs commandés ($SW2_i$,$SW3_i$) et deux inductances ($L3_i$,$L4_i$) ou un interrupteur ($SW2_i$) et un transformateur ($T1_i$).

11. Système d'équilibrage pour batterie selon l'une quelconque des revendications 9 à 10, **caractérisé en ce que** le dispositif de commande (3) est configuré pour fermer et ouvrir l'interrupteur commandé ($SW2_i$,$SW3_i$,$SW4_i$,$SW5_i$) du générateur de tension (7) respectivement selon un temps de conduction et un temps d'ouverture constants pendant une phase de charge.

12. Système d'équilibrage pour batterie selon la revendication 11, **caractérisé en ce que** le temps de conduction est calculé de sorte que ledit dispositif de charge (5) fonctionne en conduction discontinue indépendamment des niveaux de tensions de l'étage d'accumulateurs associé ($Et_i$) et de la batterie (1) pendant la phase de charge.

13. Système d'équilibrage de batterie selon l'une des quelconques revendications précédentes, ladite batterie (1) comportant au moins un module élémentaire (9), chaque module élémentaire (9) comprenant une pluralité d'étages d'accumulateurs (Eti) en série, **caractérisé en ce que** ledit système d'équilibrage comporte en outre un dispositif de charge (5) supplémentaire aux bornes de chaque module élémentaire (9).

14. Système d'équilibrage pour batterie selon la revendication 13, **caractérisé en ce que** ladite batterie (1) comporte une pluralité de modules élémentaires (9) disposés en série et **en ce que** ledit système d'équilibrage (2) comporte un dispositif de charge (5) supplémentaire aux bornes d'un nombre prédéterminé de modules élémentaires (9).

15. Dispositif de charge pour un étage d'accumulateurs de batterie, **caractérisé en ce qu**'il comporte un système d'équilibrage selon l'une quelconque des revendications précédentes.


**Patentansprüche**

1. Ausgleichssystem für eine Batterie, umfassend mindestens zwei Akkumulatorenstufen (Et$_i$), die in Serie geschaltet sind, wobei jede Akkumulatorenstufe (Et$_i$) mindestens einen Akkumulator (A$_{ij}$) umfasst, der zwischen negativen (N$_i$) und positiven Polen (P$_i$) der Akkumulatorenstufe angeordnet ist, **dadurch gekennzeichnet, dass** das System umfasst:

  - mindestens einen Spannungserzeuger (7), umfassend eine positive Klemme (v2) und eine negative Klemme (v1),
  - für jede Akkumulatorenstufe (Et$_i$) eine zugehörige Ladevorrichtung (5), die vom Spannungsgenerator (7) gespeist wird und umfasst:

    • eine Induktanz (L1$_1$, L2$_i$),
    • einen ersten Kondensator (C1$_i$), dessen erstes Ende an eine Klemme (v2, v1) des Spannungserzeugers (7) angeschlossen ist, eine Diode (D1$_i$, D2$_i$), die mit ihrer Anode an den negativen Pol der zugehörigen Akkumulatorenstufe angeschlossen ist und an ein Ende der zugehörigen Induktanz (L1$_i$, L2$_i$) angeschlossen ist, um, wenn die Diode (D1$_i$, D2$_i$) durchgängig ist, eine Zirkulation eines Ladestroms durch die zugehörige Akkumulatorenstufe, die zugehörige Diode (D1$_i$, D2$_i$) und Induktanz (L1$_i$, L2$_i$) zu ermöglichen, und
    • einen Schalter (SW1$_i$), dessen eines Ende mit einem Ende der Induktanz (L1$_i$, L2$_i$) verbunden ist, so dass der Schalter (SW1$_i$), die Induktanz (L1$_i$, L2$_i$) und der erste Kondensator (C1$_i$) einer Ladevorrichtung (5) in Serie zwischen einer Klemme (v2, v1) des Spannungserzeugers (7) und einem Pol der zugehörigen Akkumulatorenstufe angeschlossen sind, und

  - eine Steuervorrichtung (3), die derart ausgeführt ist, dass:

    • während einer Leitungszeit eine Spannungsvariation zwischen den Klemmen (v2, v1) des Spannungserzeugers (7) angelegt wird und der Schalter (SW1$_i$) einer zu einer zu ladenden Akkumulatorenstufe zugehörigen Ladevorrichtung (5) geschlossen wird, so dass die Induktanz (L1$_i$, L2$_i$) und der Schalter (SW1$_i$) der Ladevorrichtung (5) von einem zunehmenden Speisestrom durchströmt werden, der vom Spannungserzeuger (7) kommt, und dass die Induktanz (L1$_i$, L2$_i$) Energie speichert; und
    • nach der Leitungszeit der Speisestrom durch die Induktanz (L1$_i$, L2$_i$) unterbrochen wird und die Übertragung der in der Induktanz (L1$_i$, L2$_i$) gespeicherten Energie an die zugehörige Akkumulatorenstufe durch Zirkulation eines abnehmenden Ladestroms durch die zugehörige Induktanz (L1$_i$, L2$_i$) und Diode (D1$_i$, D2$_i$) ermöglicht wird.

2. Ausgleichssystem für eine Batterie nach Anspruch 1, **dadurch gekennzeichnet, dass** es seinen Spannungserzeuger (7) umfasst, der an eine vordefinierte Anzahl von Ladevorrichtungen (5) angeschlossen ist.

3. Ausgleichssystem für eine Batterie nach einem der Ansprüche 1 oder 2, **dadurch gekennzeichnet, dass** der erste Kondensator (C1$_i$) ein erstes Ende aufweist, das an die positive Klemme (v2) des Spannungserzeugers (7) angeschlossen ist.

4. Ausgleichssystem für eine Batterie nach einem der Ansprüche 1 bis 3, **dadurch gekennzeichnet, dass** die Diode (D1$_i$) mit ihrer Anode an den negativen Pol der zugehörigen Akkumulatorenstufe und mit ihrer Kathode an ein erstes Ende der Induktanz (L1$_i$) angeschlossen ist.

5. Ausgleichssystem für eine Batterie nach einem der vorhergehenden Ansprüche, **dadurch gekennzeichnet, dass** die Steuervorrichtung (3) derart ausgeführt ist, dass sie den Speisestrom durch die Induktanz (L1$_i$, L2$_i$) unterbricht, wobei sie eine Nullspannung an den Klemmen des Spannungserzeugers (7) anlegt.

6. Ausgleichssystem für eine Batterie nach Anspruch 3, **dadurch gekennzeichnet, dass**:

- ein zweites Ende des ersten Kondensators (C1$_i$) an ein erstes Ende der Induktanz (L1$_i$) angeschlossen ist,
- die Kathode der Diode (D1$_i$) an das zweite Ende des ersten Kondensators (C1$_i$) angeschlossen ist, und
- der Schalter (SW1$_i$) der Ladevorrichtung (5) mit einem ersten Ende an ein zweites Ende der Induktanz (L1$_i$) und mit einem zweiten Ende an den positiven Pol (P$_i$) der zugehörigen Akkumulatorenstufe angeschlossen ist.

7. Ausgleichssystem für eine Batterie nach Anspruch 3, **dadurch gekennzeichnet, dass**:

- die Ladevorrichtung umfasst:

• einen ersten Kondensator (C1$_i$), dessen erstes Ende an die positive Klemme (v2) des Spannungserzeugers (7) angeschlossen ist, und dessen zweites Ende an das erste Ende der Induktanz (L1$_i$) angeschlossen ist,
• einen zweiten Kondensator (C2$_i$), dessen erstes Ende an die negative Klemme (v1) des Spannungserzeugers (7) angeschlossen ist, und dessen zweites Ende an den negativen Pol (N$_i$) der zugehörigen Akkumulatorenstufe oder an das zweite Ende der Induktanz (L1$_i$) und an den positiven Pol (P$_i$) der zugehörigen Akkumulatorenstufe angeschlossen ist, und dass

- die Diode (D1$_i$) mit ihrer Anode und ihrer Kathode an den negativen Polo (N$_i$) der zugehörigen Akkumulatorenstufe bzw. an das erste Ende der Induktanz (L1$_i$) angeschlossen ist, und
- der Schalter (SW1$_i$) der Ladevorrichtung (5) mit einem Ende an die Induktanz (L1$_i$) und mit einem weiteren Ende an den positiven Pol (P$_i$) der zugehörigen Akkumulatorenstufe und an den ersten Kondensator (C1$_i$) angeschlossen ist.

8. Ausgleichssystem für eine Batterie nach einem der vorhergehenden Ansprüche, **dadurch gekennzeichnet, dass** die Steuervorrichtung (3) derart ausgeführt ist, dass sie die Schließgeschwindigkeit des Schalters (SW1$_i$) einer Ladevorrichtung (5), die einer zu ladenden Akkumulatorenstufe (Et$_i$) zugeordnet ist, kontrolliert, wenn eine Spannung vorher an die Pole (v1, v2) des Spannungsgenerators (7), der die Ladevorrichtung (5) speist, angelegt wird.

9. Ausgleichssystem für eine Batterie nach einem der vorhergehenden Ansprüche, **dadurch gekennzeichnet, dass** der Spannungsgenerator (7) mindestens einen von der Steuervorrichtung (3) gesteuerten Schalter (SW2$_i$, SW2$_i$, SW3$_i$, SW4$_i$, SW5$_i$) umfasst, und dass der mindestens eine Spannungsgenerator (7) einen Entkopplungskondensator (C3$_i$) umfasst.

10. Ausgleichssystem für eine Batterie nach den Ansprüchen 7 und 9, **dadurch gekennzeichnet, dass** der Spannungsgenerator (7) zwei gesteuerte Schalter (SW2$_i$, SW3$_i$) und zwei Induktanzen (L3$_i$, L4$_i$) oder einen Schalter (SW2$_i$) und einen Transformator (T1$_i$) umfasst.

11. Ausgleichssystem für eine Batterie nach einem der Ansprüche 9 bis 10, **dadurch gekennzeichnet, dass** die Steuervorrichtung (3) derart ausgeführt ist, dass sie den gesteuerten Schalter (SW2$_i$, SW3$_i$, SW4$_i$, SW5$_i$) des Spannungserzeugers (7) nach einer Leitungszeit bzw. nach einer Öffnungszeit, die während einer Ladephase konstant sind, schließt und öffnet.

12. Ausgleichssystem für eine Batterie nach Anspruch 11, **dadurch gekennzeichnet, dass** die Leitungszeit derart berechnet ist, dass die Ladevorrichtung (5) mit diskontinuierlicher Leitung unabhängig von den Spannungsniveaus der zugehörigen Akkumulatorenstufe (Et$_i$) und der Batterie (1) während der Ladephase funktioniert.

13. Ausgleichssystem für eine Batterie nach einem der vorhergehenden Ansprüche, wobei die Batterie (1) mindestens ein elementares Modul (9) umfasst, wobei jedes elementare Modul (9) eine Vielzahl von Akkumulatorenstufen (Et$_i$) in Serie umfasst, **dadurch gekennzeichnet, dass** das Ausgleichssystem ferner eine zusätzliche Ladevorrichtung (5) an den Klemmen jedes elementaren Moduls (9) umfasst.

14. Ausgleichssystem für eine Batterie nach Anspruch 13, **dadurch gekennzeichnet, dass** die Batterie (1) eine Vielzahl von elementaren Elementen (9) umfasst, die in Serie angeordnet sind, und dass das Ausgleichssystem (2) eine zusätzliche Ladevorrichtung (5) an den Klemmen einer vorbestimmten Anzahl von elementaren Modulen (9) umfasst.

15. Ladevorrichtung für eine Akkumulatorenstufe, **dadurch gekennzeichnet, dass** sie ein Ausgleichssystem nach einem der vorhergehenden Ansprüche umfasst.

**Claims**

1. A battery equalization system comprising at least two accumulator stages ($Et_i$) arranged in series, each accumulator stage ($Et_i$) comprising at least one accumulator ($A_{ij}$) placed between negative ($N_i$) and positive ($P_i$) poles of the accumulator stage, **characterized in that** said system comprises:

   - at least one voltage generator (7) comprising a positive terminal (v2) and a negative terminal (v1) ,
   - for each accumulator stage ($Et_i$), an associated charging device (5) powered by the voltage generator (7) and comprising:
   - an inductor ($L1_i$, $L2_i$),
   - a first capacitor ($C1_i$), the first end of which is connected to a terminal (v2, v1) of the voltage generator (7), a diode ($D1_i$, $D2_i$) connected by its anode to the negative pole of said associated accumulator stage and connected to an end of the associated inductor ($L1_i$, $L2_i$) so as to enable, when the diode ($D1_i$, $D2_i$) is non-blocking, circulation of a charge current through the associated accumulator stage, the associated diode ($D1_i$, $D2_i$) and inductor ($L1_i$, $L2_i$), and
   - a switch ($SW1_i$), the end of which is connected to an end of the inductor ($L1_i$, $L2_i$) such that the switch ($SW1_i$), the inductor ($L1_i$, $L2_i$) and the first capacitor ($C1_i$) of a charging device (5) are connected in series between a terminal (v2, v1) of the voltage generator (7) and a pole of the associated accumulator stage, and
   - a control device (3) configured to:

      • during a conduction time, apply a voltage variation between the terminals (v2, v1) of the voltage generator (7) and close the switch ($SW1_i$) of a charging device (5) associated with an accumulator stage to be charged, so that the inductor ($L1_i$, $L2_i$) and the switch ($SW1_i$) of the charging device (5) are traversed by an increasing supply current from the voltage generator (7) and so that the inductor ($L1_i$, $L2_i$) stores energy; and
      • after the conduction time, interrupt said supply current through the inductor ($L1_i$, $L2_i$) and enable the transfer of energy stored in the inductor ($L1_i$, $L2_i$) to said associated accumulator stage by circulation of a decreasing charge current through the associated inductor ($L1_i$, $L2_i$) and diode ($D1_i$, $D2_i$).

2. The battery equalization system according to claim 1, **characterized in that** the system comprises a voltage generator (7) connected to a predefined number of charging devices (5).

3. The battery equalization system according to one of claims 1 or 2, **characterized in that** the first capacitor ($C1_i$) presents a first end connected to the positive terminal (v2) of the voltage generator (7).

4. The battery equalization system according to one of claims 1 to 3, **characterized in that** the diode ($D1_i$) is connected by its anode to the negative pole of the associated accumulator stage and by its cathode to a first end of the inductor ($L1_i$).

5. The battery equalization system according to any one of the previous claims, **characterized in that** the control device (3) is configured to interrupt the supply current through the inductor ($L1_i$ $L2_i$) by imposing zero voltage at the terminals of the voltage generator (7).

6. The battery equalization system according to claim 3, **characterized in that**:

   - a second end of the first capacitor ($C1_i$) is connected to a first end of the inductor ($L1_i$),
   - the cathode of the diode ($D1_i$) is connected to the second end of the first capacitor ($C1_i$), and
   - the switch ($SW1_i$) of the charging device (5) is connected by a first end to a second end of the inductor ($L1_i$) and by a second end to the positive pole ($P_i$) of the associated accumulator stage.

7. The battery equalization system according to claim 3, **characterized in that**:

   - the charging device comprises:

      • a first capacitor ($C1_i$), the first end of which is connected to the positive terminal (v2) of the voltage generator (7) and the second end of which is connected to the first end of the inductor (L1$_i$),

• a second capacitor (C2$_i$), the first end of which is connected to the negative terminal (v1) of the voltage generator (7) and the second end of which is connected to the negative pole (N$_i$) of the associated accumulator stage or to the second end of the inductor (L1$_i$) and to the positive pole (P$_i$) of the associated accumulator stage, and **in that**

- the diode (D1$_i$) is connected by its anode and its cathode respectively to the negative pole (N$_i$) of the associated accumulator stage and to the first end of the inductor (L1$_i$), and
- the switch (SW1$_i$) of the charging device (5) is connected by one end to the inductor (L1$_i$) and by another end to the positive pole (P$_i$) of the associated accumulator stage or to the first capacitor (C1$_i$).

8. The battery equalization system according to any one of the previous claims, **characterized in that** the control device (3) is configured to control the closing speed of the switch (SW1$_i$) of a charging device (5) associated with an accumulator stage (Et$_i$) to be charged, when a voltage is previously applied to the poles (v1, v2) of the voltage generator (7) supplying the charging device (5).

9. The battery equalization system according to any one of the previous claims, **characterized in that** the voltage generator (7) comprises at least one switch (SW2$_i$, SW3$_i$, SW4$_i$, SW5$_i$) controlled by the control device (3) and **in that** said at least one voltage generator (7) comprises a decoupling capacitor (C3$_i$).

10. The battery equalization system according to claims 7 and 9, **characterized in that** the voltage generator (7) comprises two controlled switches (SW2$_i$, SW3$_i$) and two inductors (L3$_i$, L4$_i$) or a switch (SW2$_i$) and a transformer (T1$_i$).

11. The battery equalization system according to any one of claims 9 to 10, **characterized in that** the control device (3) is configured to open and close the controlled switch (SW2$_i$, SW3$_i$, SW4$_i$, SW5$_i$) of the voltage generator (7) respectively according to a conduction time and an open time that are constant during a charge phase.

12. The battery equalization system according to claim 11, **characterized in that** the conduction time is calculated so that said charging device (5) operates in discontinuous conduction independently from the voltage levels of the associated accumulator stage (Et$_i$) and the battery (1) during the charge phase.

13. The battery equalization system according to any one of the previous claims, said battery (1) comprising at least one elementary module (9), each elementary module (9) comprising a plurality of accumulator stages (Et$_i$) in series, **characterized in that** said equalization system also comprises an additional charging device (5) at the terminals of each elementary module (9).

14. The battery equalization system according to claim 13, **characterized in that** said battery (1) comprises a plurality of elementary modules (9) disposed in series and **in that** said equalization system (2) comprises an additional charging device (5) at the terminals of a predetermined number of elementary modules (9).

15. A charging device for a battery accumulator stage, **characterized in that** the device comprises an equalization system according to any one of the previous claims.

# Fig.1

# Fig.2

Fig.3

Fig.4

Fig.5

# Fig.6

# Fig.7

Fig.8A

Fig.8B

## Fig.8C

## Fig.9

## Fig.10

## Fig.11

Fig.12

Fig.13

Fig.14

## Fig.15A

## Fig.15B

## Fig.16

iL1ᵢ(t)
iC1ᵢ(t)
iC2ᵢ(t)
iD1ᵢ(t)
iEtᵢ(t)

L=1 et M=0
M=L=0       L=M=0
L=1 et M=0

Ipic

0   t₁        T   T+t₁        2.T   2.T+t₁

## Fig.17

C12

16A
12.7A
10A
Is₇(moy) ≈ 3.3A
C9
0A       0A
-4A

16A
12.7A
10A
C10
0A       0A
C11
-4A

t1

T=20µs

## Fig.18

5

SW1ᵢ
Pᵢ                          v2
                    C1ᵢ
1          L1ᵢ
                    C2ᵢ
Nᵢ     D1ᵢ              v1

## Fig.19A

## Fig.19B

Fig.20

Fig.21

Fig.22A

Fig.22B

Fig.23

Fig.23'

Fig.24A

Fig.24B

## Fig.25A

## Fig.25B

Fig.26

Fig.27

Fig.28

**EP 2 532 069 B1**

## RÉFÉRENCES CITÉES DANS LA DESCRIPTION

**Documents brevets cités dans la description**

- US 5659237 A
- CN 1905259
- US 20080084184 A